# NEUE EUROPÄISCHE PATENTSCHRIFT

(11) **EP 0 192 120 B2**
(45) Veröffentlichungstag und Bekanntmachung des Hinweises auf die Entscheidung über den Einspruch: **09.12.1998**
(45) Hinweis auf die Patenterteilung: 07.07.1993
(21) Anmeldenummer: 86101429.8
(22) Anmeldetag: 04.02.1986
(51) Int. Cl.: H04Q 9/00, H02J 13/00

(54) **Verfahren und Einrichtung zur Datenübertragung in der Fernwirktechnik**
Data transmission process and device for remote control
Système et dispositif de transmission de données pour commande à distance

(30) Priorität: 04.02.1985 DE 3503655
(43) Veröffentlichungstag der Anmeldung: 27.08.1986
(73) Patentinhaber: DEVAU Lemppenau GmbH, D-70734 Fellbach (DE)
(72) Erfinder: Dietrich, Peter, D-7952 Schwaikheim (DE)
(74) Vertreter: Altenburg, Udo, Dipl.-Phys.

(56) Entgegenhaltungen:
- EP-A- 0 039 191
- DE-A- 2 827 418
- DE-A- 3 236 812
- FR-A- 2 087 612
- LANDIS & GYR MITT., Band 24, Nr. 2, 1977, Seiten 23-30; A. MARTINC: "TELEGYR 065 - ein modernes, einfaches Fernwirksystem für Datenakquisition und Fernübertragung"
- BULL. ASE/UCS, Band 67, Nr. 14, 17. Juli 1976, Seiten 700-707; H. TRAUDISCH: "Fernwirksysteme zur Steuerung des SBB-Fahrleitungsnetzes"
- REVUE GENERALE DE L'ELECTRICITE, Band 85, Nr. 1, Januar 1976, Seiten 27-30; R. ABELLA et al.: "Les matériels de distribution de l'énergie électrique: Equipements de commande, de controle et de transport. Partie 1"
- LANDIS & GYR-MITTEILUNGEN, Band 22, Nr. 4, 1975, Seiten 11-15; R. PROFOS: "TELEGYR 709 - ein Fernwirksystem mit dezentralisierter Datenverarbeitung"
- BBC-NACHRICHTEN, Band 63, Nr. 12+index, 1981, Seiten 426-435, Mannheim, DE; R. FLEISCHER et al.: "Rechnergeführtes Fernwirksystem für ein Erdgastransport-und-verteilnetz"
- Fachbuch "Fernwirktechnik - Überwachen und Steuern von Prozessen", H. Benndorf et al., VDI-Verlag GmbH,1975 Düsseldorf, DE
- SEL Firmendruckschrift IST 26 "Ein vollelektronisches Fernwirksystem zum Fernsteuern und Fernüberwachen technischer Einrichtungen in unbemannten Stationen", März 1978
- etz Archiv Bd. 5 (1983) H.2; D. Rumpel:"Netzdatensprache", S. 47-54
- etz Bd. 105 (1984) Heft 19, S. 1014-1019, K-H Jaekel et al.:"Datenmodell zur Abbildung beliebig strukturierter elektrischer Netze"
- ETG-Fachberichte 14, VDE-Verlag, Berlin.Offenbach,DE;"Mikroelektronik in der Energietechnik", S. 22-31;
- Siemens-Zeitschrift 52 (1978) Heft 11; "SINAUT 8-FW, ein rechnergeführtes Fernwirksystem", S. 601-605
- Siemens Firmenschrift "SINAUT 8-FW, ein rechnergeführtes Fernwirksystem", S. 6-19, 24, März 1979
- ETG-Fachberichte 9, Leittechnik in Kraftwerken, VDE-Verlag GmbH, Berlin, DE, 1981, J. Pinkernell: "Bussysteme in Leitanlagen für Kraftwerke", S. 85-104
- Technische Rundschau, Bern, CH, Nr. 4, 23.Januar 1979, H. Mazan: "Mikrocomputer für Fernwirksysteme", S. 13-15
- Elektrizitätswirtschaft, Jg. 78 (1979), Heft 7, S. 227-237, G.Cwienk: "Die Automation elektrischer Verteilungsnetze-kybernetische und topologische Aspekte"
- Nachrichtentechnische Fachberichte, Band 50, 1975, VDE-Verlag GmbH, Berlin, DE, S. 94-107, R. Beyersdorff: "Kommunikation in Fernwirkanlagen"
- ETG-Fachberichte 12, VDE-Verlag GmbH, Berlin Offenbach, 1983, Selektivschutz; H. Rijanto: " Weiterentwicklung der Schutz- und Schaltanlagenautomatisierungstechnik mit Mikrorechnern", S. 133-142
- Elektrizitätswirtschaft, Jg. 83 (1984), Heft 16, S. 726-730; W. Dhen: "Integrierte Schaltanlagen-Leittechnik"

## Beschreibung

Die Erfindung betrifft ein Verfahren und eine Einrichtung zur Datenübertragung in der Fernwirktechnik in Melde- und Befehlsrichtung, bei dem Information von einer Informationsquelle zu einer oder mehreren Informationssenken auf vorhandenen langsamen Übertragungskanälen übertragen wird.

### 1. Einführung

### 1.1 Stand der Technik

In der Fernwirktechnik stehen bekanntlich im Gegensatz zur sonstigen Telekommunikation vergleichsweise langsame Übertragungskanäle zur Verfügung. Häufig werden zur Übertragung die vorhandenen Energieübertragungsstrecken (Freileitungen, Kabel) und sonstige Nachrichtenwege benutzt, die mit vertretbarem Aufwand nur eine schmale Bandbreite zulassen. Von diesem Frequenzband wird bei abgelegenen Anlagen ein großer Teil z.B. für eine Telefonverbindung benötigt, so daß für die Datenübertragung dann z.B. nur der Bereich unterhalb von 300 Hz zur Verfügung steht. Eine gängige Übertragungsrate ist daher zur Zeit für solche Fälle 50 oder 200 Baud.
Bekanntermaßen werden in der konventionellen Fernwirktechnik die an einer Übergabeleiste 1 zu 1 anstehenden Informationen mittels eines zeitmultiplexen Systems an eine entfernte Steuerstelle übertragen und dort ausgegeben. Die Informationen sind in fast beliebiger Weise entsprechend den Eingabeleisten als Einzelbits in Telegrammen perlenartig aufgereiht, ohne Berücksichtigung einer Weiterverarbeitung. Es sind heute Anwendungsfälle bekannt, bei denen über in den Unterstationen eingebaute Module einzelne oder alle Informationsbits nach denselben Prinzipien wie in den Rechnern der einzelnen Netzleitstellen in verschiedene Informationsrahmen rangiert werden, ohne jedoch das Prinzip der perlenartigen Aufreihung von Einzelbits in Telegrammen zu durchbrechen.

Die Befehlsrichtung, d.h. die Übertragung von Steuerbefehlen von einer zentralen Steuerstelle z.B. zu einer entfernten Schaltanlage, geschieht auf die entsprechende Weise durch Setzen einzelner Bits in einem Befehlstelegramm. Auch hierbei ist die Klemme der Befehlseingabeleiste als Bit innerhalb des Befehlstelegramms abgebildet und wird am Ausgabeort als Spannung an einer Befehlsausgabeklemme dargestellt.

Bei reiner Informationsübertragung von Punkt zu Punkt und Übertragung des Abbilds von Übergabeleisten mittels der Fernwirktechnik von einem Ort zu einem anderen Ort ist dieses System ausreichend. Sollen jedoch die in einer Unterstelle erfaßten Informationen weiterverarbeitet oder an andere Ebenen eines Informationsnetzes übergeben werden, so muß im Rechner einer nachgeschalteten Datenverarbeitungsanlage für jedes einzelne Bit eine Beschreibung hinterlegt werden. Werden auf diese Weise mehrere Ebenen des Informationsnetzes mit verschiedenen Datenverarbeitungsanlagen hierarchisch durchlaufen, so vervielfacht sich der Beschreibungsaufwand und damit auch der Änderungsaufwand für die einzelnen Informationsbits.

Die sich daraus ergebende Datenstruktur in der Übertragung hat den Nachteil, daß die zu einer einzelnen Datenquelle gehörenden Informationen im Informationsrahmen der Übertragung beliebig und willkürlich verteilt sind.

Herkömmliche digitale Datenübertragungsverfahren aus der Telekommunikation lassen sich auf die Fernwirktechnik nicht übertragen, da wie oben angeführt, die in der Fernwirktechnik üblicherweise langsamen Übertragungskanäle bereits für die Übertragung einer oder nur weniger Informationen nicht mehr ausreichen würden.

### 1.2 Aufgabe und Lösung

Die Erfindung geht aus von einem Verfahren zur Datenübertragung, wie es im Oberbegriff des Patentanspruchs 1 angegeben ist. Ein derartiges Datenübertragungsverfahren ist aus der Druckschrift *Landis & Gyr Mitteilungen, Band 24, Nr. 2, 1977, Seiten 23-30* bekannt. Einer der Nachteile des bekannten Fernwirksystems ist darin zu sehen, daß die Informationsquelle einer Meldung nicht gleichbleibend kodiert ist. In dem bekannten Fernwirksystem kann ein und dieselbe Terminalnummer mehrfach vorkommen und eine bestimmte Bit-Position im Übertragungstelegramm kann unterschiedliche Bedeutungen haben. Das bekannte Verfahren erfordert somit Bit-Beschreibungstabellen in jeder Hierarchiestufe und in jedem Netz-Leitrechner. Kybernetische und topologische Aspekte bei der Automation elektrischer Verteilungsnetze behandelt ein Aufsatz von G. Cwienk, in der Zeitschrift "Elektrizitätswirtschaft" Jg.78 (1979) Heft 7, S. 227-237. In diesem Aufsatz wird deutlich gemacht, welche vielschichtigen Probleme insbesondere bei größeren Netzverbänden und reichhaltigen Strukturformen auftreten, und es wird die Grundsatzfrage aufgeworfen, ob der nach dem Stande der Technik heute immer noch beschrittene Weg mit seinen Problemen einer Vielzahl von Teilordnungen, Disordnungen und Telegramm-Umstrukturierungen auf der Einsatzebene der Prozeßrechner in den Informationsknoten und Netzleitstellen weiter verfolgt werden soll, oder ob es nicht ratsamer ist, hier neue Wege zu beschreiten. Der Verfasser versucht, die Probleme in den Griff zu bekommen durch die Einführung einer "topologischen Prozeß-Bus-Struktur" in Verbindung mit der "LOR-Konzeption", die als verbindliche kategorielle Prozeß-Sprache die Basis der gesamten Datenerfassung, -übertragung und -nachbildung auf allen Abschnitten des Prozesses und seiner Modelle bildet. Hier handelt es sich um den Versuch, eine netztopologische Datenbank mit Topologiedaten zu versorgen - ein Verfahren, das aufgrund seiner Nicht-Realisierbarkeit nicht weiterverfolgt wurde und niemals zum Einsatz kam.

Auf der NTG-Fachtagung "Stand und zukünftige Entwicklung der Fernwirktechnik" in Düsseldorf, 29.-31,10.1974 wurde von R. Beyersdorff ein Vortrag "Kommunikation in Fernwirkanlagen" gehalten, der in der Zeitschrift "Nachrichtentechnische Fachberichte" Bd.50, 1975, S. 94-107 veröffentlicht worden ist. Er zählt die wichtigsten Betriebsarten in Fernwirkanlagen auf, den End-End-Verkehr und den Gemeinschaftsverkehr (Richtungsverkehr). Demnach meidet man heute den spontanen Betrieb beim Gemeinschaftsverkehr und bevorzugt zyklisch arbeitende Systeme. Dabei bietet die heutige Halbleitertechnik im Gegensatz zur Relaistechnik die besten Voraussetzungen, den Betriebsablauf in einer Fernwirkanlage von einer Zentralstation aus zu steuern von der in Befehlsrichtung Befehle und Stellwerte an die Unterstationen ausgehen und in der in Melderichtung von den Unterstationen ausgesandte Meldungen und Meßwerte zusammenlaufen. Die heute akzeptierten Protokolle für die Telegramme zur Meldungsübertragung bei Aufrufbetrieb werden angegeben. Zur Darstellung von Meldungen und Befehlen in Fernwirktelegrammen wird nach Art der Klemmleistenabbildungen zwischen (a) der uncodierten Darstellung und (b) der codierten Darstellung unterschieden. Die uncodierte Form der Übertragung empfiehlt sich für die Datenübertragung in Melderichtung, während die codierte Form der Übertragung bevorzugt für die Befehlsrichtung eingesetzt wird. Bei der uncodierten Darstellung werden z.B. n=32 Kontakte einer Ereignis-Eingabe-Klemmleiste parallelserienweise in eine binäre Bitfolge umgesetzt, wobei z.B. "1" einen geschlossenen und "0" einen offenen Konkakt kennzeichnen. Dieses 1/0-Bitmuster wird schrittweise, also seriell, über einen Sender ins Fernwirknetz ausgesendet. Bei der codierten Darstellung werden z.B. n=32 Eingabeschalter zwischen zwei Klemmen zur Meldung eines Ereignisses hin- und hergeschaltet. In einer Neuigkeitsermittlungsschaltung werden die 2x32 Kontakte nacheinander auf ihren Zustand abgefragt, wobei die relevante Kontaktnummer der 32 Meldezustände binär codiert wird (für Zahlen 0 bis 32 benötigt man 5 Bits) mit einem zusätzlichen sechsten Bit zur Kennzeichnung, ob der linke oder rechte Kontakt aktiviert ist. Bei der codierten Darstellung müssen schrittweise nacheinander 32 Fernwirktelegramme mit einer aus 6 Bits bestehenden "Meldungsnummer" ausgesendet werden anstatt des nur einen Telegramms bei der uncodierten Darstellung. Sowohl bei der uncodierten wie bei der codierten Darstellung steht im Parallel-Serien-Umsetzer ein bestimmtes Bitmuster (n=32 Bits in der uncodierten Darstellung bzw. i=6 Bits in der codierten Darstellung). Ein solches Bitmuster kann man als eine binär dargestellte Zahl oder Nummer auffassen, die in Melderichtung gesendet wird (daher "Meldungsnummer" für die Klemmleistenabbildung). In der nachfolgenden Beschreibung wird in diesem Patent auch der Begriff "Meldungsnummer" jedoch in anderer Bedeutung verwendet, wie aus den an den betreffenden Stellen angegebenen Definitionen hervorgeht. Diese "logischen" Meldungsnummern entstehen durch Parametrierung von Ereignismeldungen; sie sind keine Klemmleistenabbildung.

Der hier zitierte Artikel von Beyersdorff befaßt sich in erster Linie mit dem Problem einer Verkürzung der Durchgabezeit wichtiger Meldungswechsel, wobei z.B. empfohlen wird, Meldevolumina der Stationen in mehrere Gruppen zu unterteilen oder eine aufgerufene Station nur dann ihre Meldungen übertragen zu lassen, wenn eine Änderung gegenüber dem früheren Telegramm eingetreten ist. Alle diese empfohlenen Maßnahmen lösen jedoch nicht die Aufgabe der vorliegenden Erfindung. Der Autor plädiert abschliessend sogar dafür, Fernwirksysteme speziell für bestimmte Anwendungsfälle auszulegen, um Übertragungsballast (lange Adressen, Gleichlauf- und Prüfinformationen und andere Hilfsinformationen) zu vermeiden. Die Erfindung hat sich daher die Aufgabe gestellt, ein Verfahren zur Datenübertragung in hierarchischen und/oder vermaschten Fernwirknetzen anzugeben, das bei der Umsetzung der Übertragungstelegramme in den Netzknoten ohne aufwendige Bitbeschreibende Zuweisungslisten auskommt.

Diese Aufgabe wird bei einem Datenübertragungsverfahren nach dem Oberbegriff des Patentanspruchs 1 durch dessen kennzeichnende Merkmale gelöst. Das erfindungsgemäße Verfahren verwendet selbstbeschreibende Datenformate in dem Sinne, daß in jeder Hierarchieebene eindeutig und gleichbleibend der Ort des technischen Prozesses (z.B. ein Schalter), nicht aber eine übertragungstechnische Einheit (z.B. ein Terminal) als Informationsquelle kodiert ist. Hierzu wird jedem zu meldenden Ereignis gleichbleibend innerhalb des gesamten Fernwirknetzes eine Meldungsnummer zugeordnet. Das zu meldende Ereignis, dem die Meldungsnummer zugeordnet ist, kann eine Meldung im engeren Sinne, ein Zählwert, ein Meßwert und/oder ein rückzumeldender Befehl sein. Bei dem erfindungsgemäßen Verfahren werden somit keine Abbilder von Klemmleisten übertragen, sondern Datenformate, die jedes Ereignis unabhängig von der übertragungstechnischen Verschaltung beschreiben. Die Adresse der Informationsquelle, die zusammen mit der Meldungsnummer im Datenformat enthalten ist, ist in jeder Hierarchieebene eindeutig und durchgängig gleichbleibend das auslösende Element des technischen Prozesses.

Der Patentanspruch 17 enthält die Struktur einer Unterstation, die das Verfahren nach dem Patentanspruch 1 ausführen kann.
Zweckmäßige Weiterbildungen gehen aus den jeweiligen abhängigen Ansprüchen hervor.

### 1.3 Vorteile

Die Erfindung hat den Vorteil, daß zu jedem Zeitpunkt und in jeder Ebene des Informationsnetzes die Bedeutung und die Quelle einer Einzelinformation erkannt werden kann. Dadurch wird es möglich, daß bei Änderungen von Einzelquellen, beispielsweise Schaltgeräten, nur in der betreffenden Unterstation die zugehörige Datenquellenbeschreibung angepaßt werden muß. Darüber hinausgehende Erweiterungen im Informationsnetz oder gar Neu- oder Nachgenerierungen von Dateien für die im Netz eingesetzten Rechner sind nicht erforderlich, sofern die Dateien einmal richtig erstellt worden sind.

Die vorliegende Erfindung ist verträglich mit bereits vorhandenen Systemen, so daß eine Anpassung nach und nach vorgenommen werden kann. Darüber hinaus bietet die vorliegende Erfindung den Vorteil, daß sie auch für zukünftige Erweiterungen offen ist. Die Verträglichkeit mit den bereits vorhandenen Systemen wird u.a. dadurch sichergestellt, daß das vorliegende Verfahren etwa z.B. die gleichen Informationen in der gleichen Zeit übertragen kann wie die bisherigen Systeme. Die Sicherheitsbedingungen der bisherigen Systeme werden erfüllt oder gar noch weit übertroffen. Mit der vorliegenden Erfindung ist eine laufende Aussage über die Übertragungskanalgüte möglich.

Durch die selbstbeschreibenden Datenformate entfallen die bisher notwendigen Bit-beschreibenden Zuweisungslisten in den einzelnen Netzknoten. Bei Erweiterungen in einer Unterstation muß der allgemeine Datenbestand in den Netzknoten nicht geändert werden. Ebenso entfallen Änderungen in den Datenverarbeitungsanlagen der Netzleitstellen. Erstmalig wird mit der vorliegenden Erfindung im Rahmen der Fernwirktechnik eine Übertragung von Klartextinformation z.B. in ASCII-Code möglich, wodurch die Inbetriebnahme, die Wartung und Instandhaltung eines Informationsnetzes in der Fernwirktechnik ganz wesentlich vereinfacht wird.

Ein weiterer Vorteil der vorliegenden Erfindung ist darin zu sehen, daß die bisher notwendige Verdrahtung innerhalb einer Unterstation ganz wesentlich vereinfacht wird. Dadurch ergeben sich weitere Möglichkeiten zur Kosteneinsparung.

Die Informationen werden vorteilhafterweise nach Wichtigkeit ausgewählt, komprimiert oder gebündelt und die Meßwerte werden verdichtet. Dadurch läßt sich die Übertragungszeit, die für die Informationsmenge an sich notwendig ist, entscheidend vermindern.
Vorteilhafterweise läßt sich jede Veränderung des Netzzustandes anhand der vorliegenden Informationen trotzdem nachvollziehen, da jede Information mit einem Zeitstempel versehen werden kann, der eine Zeitauflösung unter 1 ms ermöglicht.

Des weiteren wird vorteilhaft ausgenützt, daß sich die Übertragungsgeschwindigkeit auf Einzelstrecken des Fernwirknetzes den zu übertragenden Daten anpassen läßt. Dies ist insbesondere dann auch ohne größere zusätzliche Kosten zu verwirklichen, wenn die Informationsquellen räumlich dicht benachbart sind. Allgemein ist davon auszugehen, daß nur in einem solchen Fall große Informationsmengen zur Übertragung anstehen können.

In anderen Fällen, in denen es notwendig ist, große Informationsmengen zu übertragen, werden diese Informationsmengen in langen Übertragungspaketen übertragen, die in logische Blöcke unterteilt sind, wobei die Übertragung der Informationspakete ohne Informationsverlust nach jedem logischen Block unterbrochen werden kann. Die Meßwerte werden vorteilhafterweise in physikalischen Größen mit codierten Sl-Einheiten übertragen. Dies erleichtert die Weiterverarbeitung und die Datennachführung.

Die vorliegende Erfindung ermöglicht vorteilhafterweise, daß mit nur einer Unterstation eine Steuerung bei Mehrfachzugriff, z.B. auch in großen Umspannwerken konflikffrei erfolgen kann. Auch im Störungsfall ist eine Umschaltmöglichkeit der Hauptschaltberechtigung gewährleistet. Bei erhöhten Sicherheitsanforderungen ermöglicht die vorliegende Erfindung vorteilhafterweise den Einsatz von Doppel- und MehrrechnerStrukturen in der Unterstation.

Die Gesamtheit der Informationsmenge, die in einer Unterstation anfällt, läßt sich mit Informationsmasken in beliebige Untermengen aufteilen, die beliebig getrennt an beliebige Netzleitstellen übertragen werden können.

Die das Verfahren realisierende Einrichtung zur Datenübertragung in der Fernwirktechnik ist modular aufgebaut. Dadurch wird der Wartungs- und Instandhaltungsaufwand ganz wesentlich vermindert.

### 1.4 Figurenbeschreibung

Weitere Vorteile, Merkmale und Anwendungsmöglichkeiten der vorliegenden Erfindung ergeben sich aus der nachfolgenden Beschreibung eines Ausführungsbeispiels in Verbindung mit der Zeichnung. Darin zeigen:
Figur 1 die Architektur eines Fernwirksystems,
Figur 2 Fernwirkeinrichtungen im Umspannwerk,
Figur 3 Struktur einer Unterstation,
Figur 4 einen Datenfluß der Unterstation in Melderichtung,
Figur 5 Hierarchiestufen eines Meldungskonzentrators,
Figur 6 Prinzipschaltbild einer Befehlsausgabe,
Figur 7 ein Meldungsformat auf einer Fernübertragungsstrecke,
Figur 8 Übertragungszeiten auf einer Fernübertragungsstrecke,
Figur 9 ein Meldungsformat auf einer internen Schnittstelle,
Figur 10 ein Übertragungsformat auf einer internen Schnittstelle in Befehlsrichtung,
Figur 11 eine Fernübertragungsstrecke und
Figur 12 eine Rechnerdopplung.

### 2. Gesamtkonzept

### 2.1 Übersicht

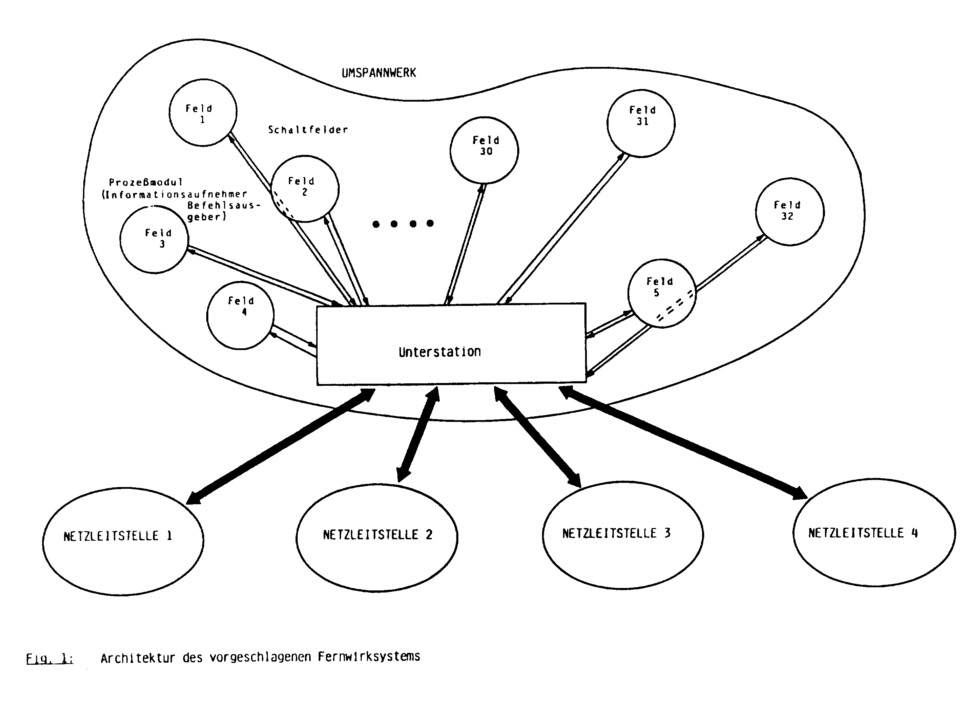

Im Gegensatz zu heutigen Strukturen, bei denen über eine Unterstation nur eine Netzleitstelle auf ein Umspannwerk zugreifen kann und über diese Unterstation die Meldungen standardmäßig nur dieser einen Netzleitstelle zur Verfügung gestellt werden können, ermöglicht das hier vorgestellte Konzept eine Meldungs- und Steuerungsstruktur, wie sie beispielhaft in Figur 1 dargestellt ist.

Die Informationen eines Umspannwerkes können verschiedenen Netzleitstellen zur Verfügung gestellt werden, ebenso wie verschiedene Netzleitstellen auf einzelne Schaltgeräte oder das gesamte Umspannwerk in Steuerrichtung zugreifen können. Hierbei werden im System Konflikffälle durch vorbereitete Algorithmen vermieden.

Die Informationen eines Schaltfeldes in einem Umspannwerk werden mittels einer oder mehrerer Baugruppen aufgesammelt und logisch dem entsprechenden Feld zugeordnet. Sie werden vorverarbeitet, konzentriert, übergreifende Meldungen werden generiert, bei Bedarf vor Ort registiert und alle Meldungen oder eine gewisse Auswahl davon, je nach Parametrierung, zur Übertragung in bis zu vier verschiedene Richtungen bereitgestellt.

Figur 1 zeigt ein Umspannwerk mit bis zu 32 Schaltfeldern und 4 Netzleitstellen. Hierbei sei z.B. unterstellt, daß eine Netzleitstelle für die Steuerung nur eines Schaltfeldes ausschließlich zuständig wäre, eine Netzleitstelle als priorisierte Steuerstelle für das gesamte Umspannwerk gelte (Hauptsteuerstelle), eine dritte Steuerstelle als Zweitsteuerstelle nach Umschaltung der Hauptsteuerfunktionen für das betreffende Umspannwerk eingesetzt werden kann und eine vierte Netzleitstelle nur ein bestimmtes Schaltgerät eines bestimmten Feldes zu bedienen hätte. Die Informationen des Umspannwerkes können je nach Parametrierung der Unterstation allen vier Netzleitstellen, einer Netzleitstelle nur eine Untermenge davon und einer zweiten Netzleitstelle nur eine andere Untermenge davon zur Verfüngung gestellt werden.

### 2.2 Fernwirktechnische Einrichtungen im Umspannwerk

Im Umspannwerk befinden sich Einrichtungen für die Aufnahme von Informationen, wie Schaltgeräte Stellungsmeldungen,
Warn- und Kennmeldungen,
Wischermeldungen,
Meßwerte und
Zählerstände.

Die Befehlsausgabe erfolgt über Ausgabeeinrichtungen mit 1-aus-n-Kontrolle und Schaltstromkontrolle. Diese Einrichtungen für die Informationserfassung und Befehlsgabe zeichnen sich durch eine hohe (7,5 kV) elektromagnetische Verträglichkeit (EMV) aus, so daß sie in Hochspannungs-schaltanlagen prozeßnah eingesetzt werden können.

### 2.3 Einrichtungen in der Steuerstelle

Bei der vorliegenden Erfindung werden in vorteilhafter Weise in den Netzleitstellen (Steuerstellen) Rechner vorausgesetzt. Das vorgestellte Fernwirkkonzept bietet dabei wesentliche Vorteile in der Codierung.

### 3. Feldbezogene Einrichtungen

### 3.1 Informationserfassung

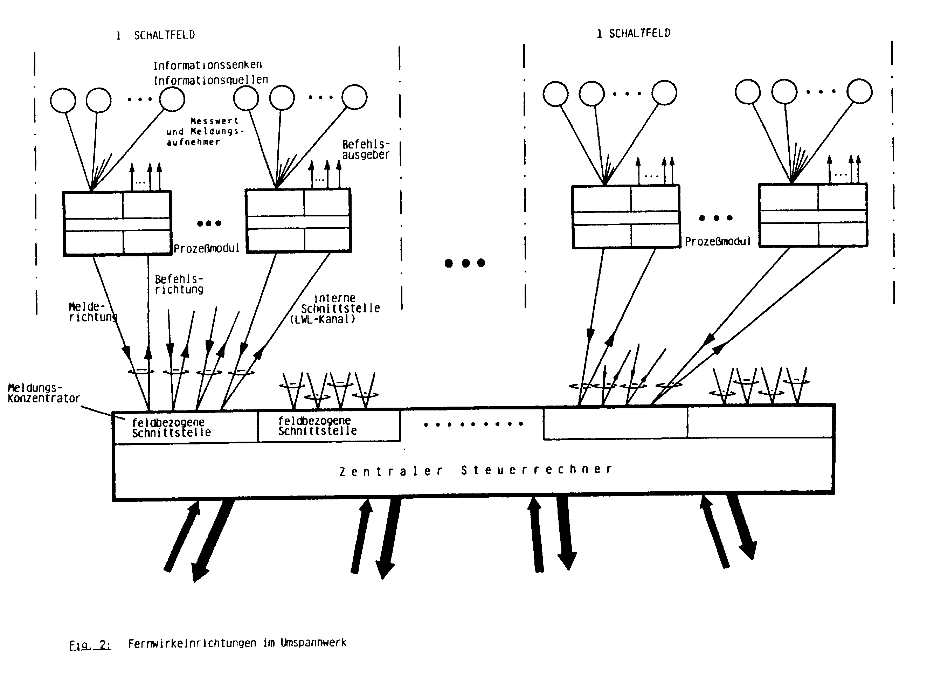

Zur Erfassung der Informationen aus den Schaltfeldern stehen Prozeßmodule zur Verfügung, von denen vorzugsweise bis zu 4 Einheiten an einen nachfolgenden Meldungskonzentrator (sh. Figur 2) angeschlossen werden können. Die Übertragung zwischen einem Prozeßmodul und dem Meldungskonzentrator erfolgt über Lichtwellenleiter (LWL). Jedes Prozeßmodul ermöglicht den Anschluß von vorzugsweise 32 Kontakten für Einzelmeldungen. Diese können problemlos auf 16 zweipolig zu übertragende Meldungen, z.B. Schaltgerätestellungsmeldungen aufgeteilt werden. Frei definiert können diese vorzugsweise 32 Meldungseingänge alle insgesamt, oder ein Teil davon z.B. für Wischermeldungen und Zählerstandsmeldungen verwendet werden. Eine Unterscheidung zwischen sogenannten "Normalen-" und oder Echtzeitmeldungen ist in der hier beschriebenen Meldungserfassung nicht erforderlich, weil sichergestellt ist, daß das gesamte Abbild eines Schaltfeldes über die dem Prozeßmodul nachgeschaltete Übertragungseinrichtung mit Lichtwellenleiter dem Meldungskonzentrator und damit der Echtzeit-Zuordnung in einer Zeitauflösung beispielsweise <6 ms angeboten und im Meldungskonzentrator verarbeitet wird (sh. Abschnitt 5 und 6).

Jedes Prozeßmodul verfügt über 4 für positive und negative Analogwerte ausgelegte Eingänge. An jedem der vorzugsweise 4 pro Feld anschaltbaren Prozeßmodule können so alle oder nur ein Teil der pro Schaltfeld anfallenden Analoginformationen aufgenommen werden. Aus wirtschaftlichen Gründen sind Prozeßmodule, die nur für Meßwerte ausgerüstet sind, denkbar.
Für diese prozeßnah eingesetzten Module sind die im Rahmen von VDE 0432 Teil 2/10.78 vorgesehenen Richtlinien für elektromagnetische Verträglichkeit mit z.B.
1/50-Welle erfüllt.

### 3.2 Befehle

Das Prozeßmodul ist neben der Erfassung der Informationen in der Lage, die gesamte Befehlsrichtung zu bedienen. Befehle werden nach Durchlaufen der 1-aus-n-Kontrolle und Freigabe durch die Schaltstromkontrolle (Abschnitt 10: Schutzalgorithmen der Befehlsausgeber) ausgegeben. Sollte einer dieser Schutzalgorithmen die Befehlsausgabe verhindern, so wird dies als Fehlermeldung dem Gesamtsystem zur Verfügung gestellt. Eine erfolgreiche Befehlsausführung wird durch die entsprechenden Meldungseingaben aus den Schaltgeräten erfaßt.

### 4. Prozeßmodul

### 4.1 Informationserfassung

Das Prozeßmodul enthält die notwendigen Einrichtungen für den Anschluß aller digital anstehenden Informationen. Dazuhin können die vorzugsweise 4 je Prozeßmodul vorgesehenen analogen Meßwerte - ohne Einfluß auf die anderweitige Verwendung der digitalen Eingänge - alternativ mit Stromschleifen als Analogwerte oder über einen Sequentiellen Datenkanal mit digital verschlüsselten Werten angschlossen werden. Eine feste Zuordnung von Schaltgerätestellungsmeldungen, Warn- oder Kennmeldungen, Wischermeldungen, Echtzeitmeldungen und Zählerständen auf die einzelnen Klemmen ist nicht erforderlich. Die Zuordnung der einzelnen Meldungen erfolgt durch entsprechende Parametrierung der Unterstation. Durch diese Parametrierung in den Meldungskonzentratoren, die den Prozeßmodulen über Lichtwellenleiter nachgeschaltet sind, werden den mechanischen Klemmen durch das gesamte Informationsnetz durchgängige und logische Meldungsnummern zugeordnet. Eine Beschränkung auf bestimmte Nummern, oder Nummernbereiche besteht nicht, sofern nur diese Nummernvergabe zentral für das gesamte Informationsnetz erfolgt (Beispielsweise verfügbarer Nummernbereich bei 11 Bit = 2048 Meldungen je Meldungstyp bei beispielsweise 32 maximal möglichen Meldungstypen. Durchschnittlich sind fernwirktechnisch derzeit in einem Netz ca. 700 unterschiedliche Meldungen relevant. Unabhängig von der Ebene des Informationsnetzes kann so, aufgrund der Meldungsnummer selbst, jede Information eindeutig erkannt werden, wenn die nachstehend beschriebenen Informationserweiterungen wie Schaltfeldnummer und Umspannwerk erfolgt sind (sh. Abschnitt 20.2).

### 4.2 Befehlsausgabe

Für die Befehlsausgabe ist in den Prozeßmodulen ein Befehlsausgeber integriert. Befehle werden zum Befehlsausgeber im Prozeßmodul als Informationsnummer übertragen. Dort wird überprüft, ob ein der übertragenen Nummer entsprechender Befehl im angesprochenen Prozeßmodul aktiviert ist. Danach wird das zu diesem Befehl gehörende Befehlsausgaberelais (Markierrelais) gesetzt (sh. Abschnitt 10). Dabei wird im Prozeßmodul ein Meldekontakt des markierten Befehlsausgaberelais abgefragt und so sichergestellt, daß nur dieses Relais die Ausgabe des anstehenden Steuerbefehls vorbereitet. Danach erfolgt die Schaltstromkontrolle. Nach erfolgreichem Abschluß dieser Tests wird über ein generelles Befehlsausgaberelais die Schaltspannung in den markierten Befehlsausgabeweg eingespeist.
Die Zeitdauer für diese Prüfungen beträgt etwa 500 ms mit Schaltstromkontrolle und nur etwa 10 ms, wenn auf die Schaltstromkontrolle verzichtet werden kann.
Der Befehlsausgeber verhindert das zeitliche Überlappen zweier Befehle: Folgt ein zweiter Befehl, solange der erste noch ansteht, so wird der zweite verworfen. Die Befehlsausgabezeit kann vorzugsweise zwischen 100 ms und 20 s frei gewählt werden.

### 5. Meldungskonzentrator und Befehlsübertragung

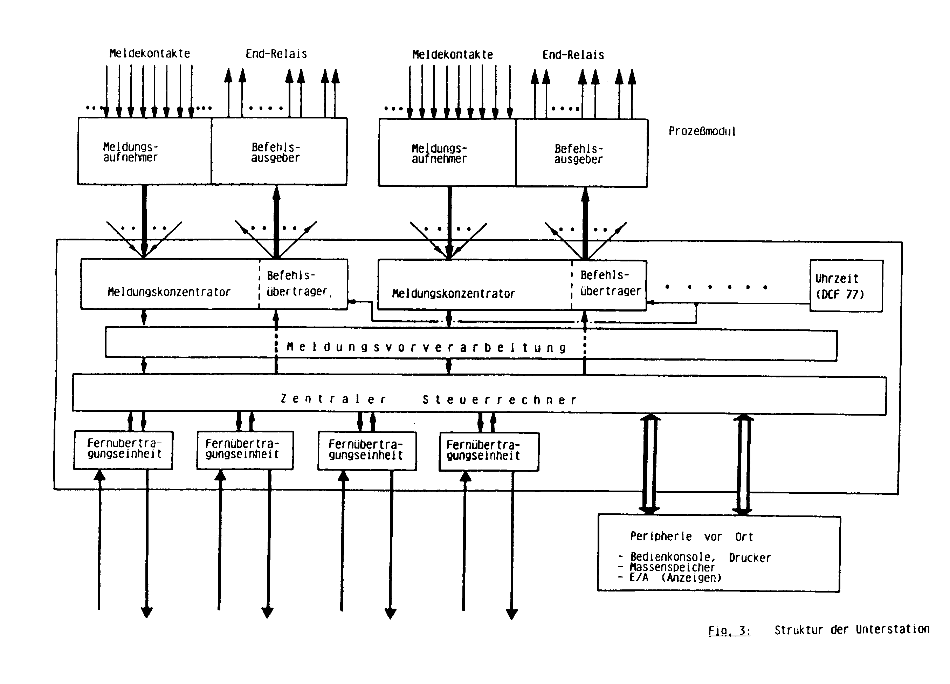

Von den Prozeßmodulen abgesetzt und mit diesen über Lichtwellenleiter verbunden, befindet sich in der Unterstation pro Schaltfeld je ein Meldungskonzentrator mit integrierter Befehlsübertragungseinrichtung. Diese Baugruppe versorgt im vorliegenden Fall bis zu maximal 4 Prozeßmodule. Die Struktur der Unterstation und damit die Verknüpfung der einzelnen Funktionen der Module ist in Figur 3 dargestellt. Man erkennt dort die Meldungskonzentratoren zwischen den Prozeßmodulen und dem Modul zur Meldungs-Vorverarbeitung.

Am Meldungskonzentrator stehen alle Informationen in Echtzeit an, d.h. der Zeitverzug zwischen deren Auftreten am Prozeßmodul und ihrem Eintreffen am Meldungskonzentrator beträgt beispielsweise <6 ms. Im Meldungskonzentrator wird ein Abbild sämtlicher in den Prozeßmodulen vorhandenen Klemmen in Echtzeit nachgeführt. Außerdem werden im Meldungskonzentrator bei der Inbetriebnahme der Anlage Parametrierbare Listen hinterlegt, welche die pro Prozeßmodul aktivierten Klemmen beschreiben. In dieser Baugruppe erfolgt die Zuordnung der aktivierten Einzelklemmen zu den im Informationsnetz erforderlichen Meldungsnummern.

Diese Parametrierung wird bei der Systeminstallation nach gewünschten Vorgaben als Defaultwerte voreingestellt und kann während der Betriebsphase jederzeit vor Ort geändert werden. Diese Arbeiten erfolgen über eine nicht dargestellte Dialogeinrichtung mit Display und Tastatur. Durch Auswahl entsprechender Bauelemente (nicht flüchtige Speicherelemente) ist sichergestellt, daß bei Spannungsausfall und Systemstillstand die jeweils aktuellen Parameter-Werte erhalten bleiben und bei Wiederanlauf des Systems richtig übernommen werden.

Da im Meldungskonzentrator das Informationsmuster an den Klemmen der Prozeßmodule in Echtzeit abgebildet wird, ist es Aufgabe des Meldungskonzentrators, mögliche Änderungen des Meldungsabbildes durch Alt-Neuvergleich unter Echtzeitbedingungen zu erkennen. Die erkannten Änderungen werden an die nachgeschalteten Einrichtungen zur Übertragung in die Ferne weitergegeben.
Dem Meldungskonzentrator obliegt auch die Aufgabe, die eintreffenden Meßwerte in zweierlei Hinsicht zu bearbeiten:
- Integrierender Schwellwert mit parametrierbarer Schwellwertvorgabe.
- Umwandlung der eintreffenden Prozentwerte in eine Meßwertdarstellung mit physikalischen Einheiten anhand im Meldungskonzentrator hinterlegter Anpassungskennlinien.

Diese Kennlinien werden über Defaultwerte voreingestellt. Vor Ort sind sie während des Betriebs änderbar.

Falls eine über den bisher bekannten Umfang hinausgehende Meldungsvorverarbeitung erforderlich wird, werden die vom Meldungskonzentrator weitergereichten Informationen mit Klassifizierungskennzeichen versehen. So werden komplexe Architekturen zur Generierung neuer logisch verknüpfter Meldungen möglich.

Beim Eintreffen der Aufforderung zur Generalabfrage wird vom Meldungskonzentrator ein komplettes Abbild der im Schaltfeld aktivierten Meldungen an die nachgeschalteten Einrichtungen zur Übertragung in die Ferne übergeben. In der Befehlsrichtung werden die vom zentralen Steuerrechner übermittelten Befehle an den jeweiligen Befehlsausgeber im Prozeßmodul weitergegeben. Systemmeldungen, z.B. Kanalausfälle oder Übertragungsstörungen werden im Meldungskonzentrator erkannt und zur Meldungsvorverarbeitung weitergereicht.
Jedem Meldungskonzentrator wird von der zentralen Uhr der Unterstation (DCF-77) die aktuelle Uhrzeit zur Verfügung gestellt. Jede an die Meldungsvorverarbeitung weitergereichte Meldung wird für systeminterne Zwecke im Meldungskonzentrator mit der aktuellen Uhrzeit versehen (sh. Abschnitte 14 und 21).

### 6. Meldungsvorverarbeitung

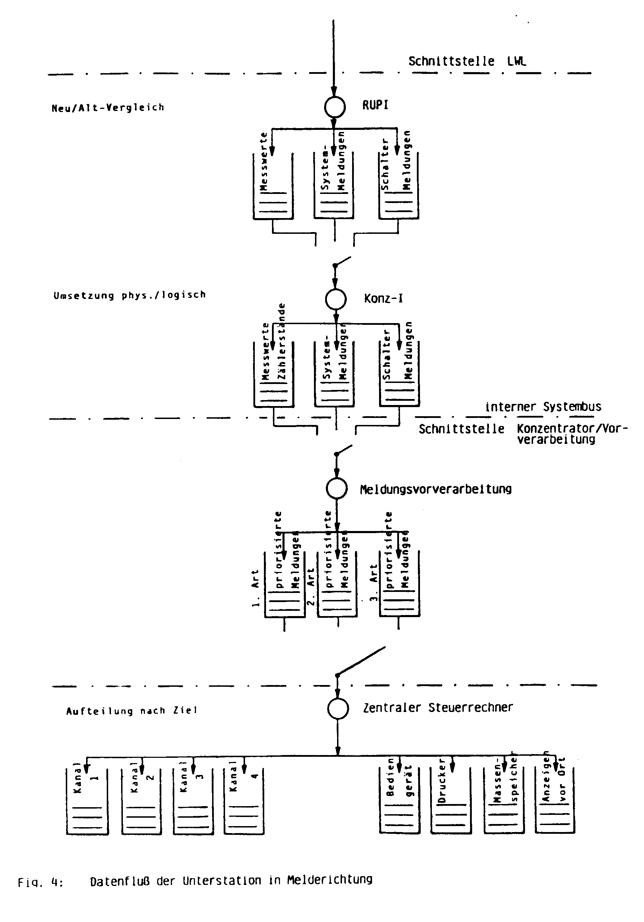

Im vorliegenden Ausführungsbeispiel werden 4 Meldungskonzentratoren an eine Meldungsvorverarbeitungs-Baugruppe angeschlossen.
Hier ist es möglich, übergeordnete Vorgänge aus der Schaltanlage zu erkennen. Bei Bedarf können neue Meldungen erzeugt sowie gegebenenfalls die dazugehörigen Einzelmeldungen unterdrückt werden.
Die von den einzelnen Konzentratoren bereitgestellten Meldungen werden nach Prioritäten sortiert und zur Übergabe an den zentralen Steuerrechner in den der Priorität entsprechenden Meldungspuffer eingetragen. Der Datenfluß in der Unterstation und die zugehörigen Bearbeitungsmodule sind beispielhaft in Figur 4 dargestellt. Generell ist eine beliebige Aufteilung nach Meldungsarten und beliebig vielen Prioritäten möglich. Eine Aufteilung der Informationen in vorzugsweise 3 Prioritätsklassen erscheint in der Praxis des vorliegenden Ausführungsbeispiels ausreichend und sinnvoll. Diese 3 Prioritätsklassen sind beispielsweise:
hohe Priorität
mittlere Priorität und
niedrige Priorität.

Gemäß den betrieblichen Erfordernissen kann der Anwender jede Meldungsart einer dieser Prioritätsklassen zuordnen. Vorgeschlagen wird:
Zur hohen Prioritätsklasse gehören all diejenigen Meldungen, welche sofort abgesetzt werden müssen, zur niedrigsten Priorität zählen all diejenigen Meldungen, welche irgend wann einmal übertragen werden müssen (eventuell mit Uhrzeit), z.B. Echtzeit, aber auch Klartext. Alle anderen Meldungen werden der mittleren Priorität zugeordnet.

Die dazugehörigen Defaultwerte werden bei der Systeminstallation entsprechend den Projektierungsvorgaben eingestellt. Sie können jedoch jederzeit vor Ort neu parametriert werden.
Die an den zentralen Steuerrechner weitergegebenen Informationen werden in der Meldungsvorverarbeitung durch die zugehörige Feldnummer ergänzt. Danach erfolgt eine Unterteilung der Meldungen in zwei Klassen:
a) Meldungen, welche nicht zur Bildung übergeordenter Meldungen verwendet werden und
b) Meldungen, welche zur Bildung übergeordenter Meldungen verwendet werden
Während Meldungen nach a) unverzögert von der Meldungsvorverarbeitung an den zentralen Steuerrechner weitergereicht werden, werden Meldungen nach b), bedingt durch die Forderung des Erkennens übergeordneter Meldungen, beim Eintreffen einer ersten Meldung eine gewisse Wartezeit verzögert, wobei als Grundwert (Defaultwert) z.B. 100 ms eingestellt sind. Innerhalb dieser 100 ms wird versucht, übergeordnete Meldungen zu bilden. Dies hat notwendigerweise zur Folge, daß beim Auftreten auch nur einer Meldung nach b) diese um 100 ms verzögert wird, bevor sie dem zentralen Steuerrechner übergeben wird. Nach Ablauf der 100 ms wird in z.B. 10 ms-Zeitintervallen geprüft, ob innerhalb eines solchen Zeitintervalls weitere Meldungen nach b) eintreffen. Die Bildung von verknüpften Meldungen erfolgt erst dann, wenn in einem derartigen 10 ms-Zeitabschnitt keine weiteren Meldungen nach b) eingetroffen sind.
Dies hat keinen Einfluß auf die Erfassung der tatsächlichen Echtzeit in den Meldungskonzentratoren (sh. Abschnitt 14: Zeitstempel).

### 7. Zentraler Steuerrechner

### 7.1 Örtliche Anzeigen und Befehlsgabe

Am zentralen Steuerrechner sind die Bedienungseinheiten für die Systemwartung und die Parametrierung vor Ort angeschlossen Außerdem stehen am zentralen Steuerrechner alle Fernwirkinformationen zur Verfügung, so daß hier eine Protokollierung mittels Druckern und Meßwertschreibern, eine Ablage der Informationen z.B. auf magnetischen Massenspeichern sowie optische und akustische Anzeigen vor Ort möglich ist. Der Anschluß einer Notsteuertafel ist hier vorgesehen.

Aus den Fernübertragungseinheiten übernimmt der zentrale Steuerrechner die Steuerbefehle und leitet diese nach Durchlaufen von Sicherungsalgorithmen und Plausibilitätskontrollen weiter zur Befehlsübertragungseinrichtung der Meldungskonzentratoren.

### 7.2 Bedienung und Systemkonfigurierung

Die Bedienung des Gesamtsystems erfolgt über das am zentralen Steuerrechner angeschlossene Bediengerät mit Display und Tastatur.
Das Bediengerät ermöglicht die Anzeige und die Einstellung der Systemparameter. Als Beispiel werden aufgeführt:
- Aktivierte Meldungen, Meßwerte und Zählerstände je Prozeßmodul und Schaltfeld
- Zuordnung der physikalischen Klemmennummern zu den im Informationssystem verwendeten logischen Meldungsnummern
- Festlegung der Feldnummern
- Meßwertkennlinien
- Zuordnung der physikalischen Meßwerteinheiten
- Einstellung der Ansprechschwelle bei der integrierten Meßwertverarbeitung
- Einstellung der Meldungsverzögerung (Default 100 ms; sh. Abschnitt 14: Zeitstempel)
- Generierungsalgorithmen für logisch verknüpfte Meldungen
- Festlegung der Meldungsprioritäten
- Festlegung der Schaltberechtigungen aus den einzelnen Netzleitstellen
- Verteilung der Informationen des Umspannwerks auf die einzelnen Netzleitstellen
- Parametrierung der Fernübertragungseinrichtungen für Meldungs- und Befehlsweg (Übertragungsgeschwindigkeit)
- interne Systemkonfiguration
- Systemgesamtausbau (Drucker, örtliche Anzeigen, örtliche Massenspeicher usw.)
- Überwachung und Zuordnung der einlaufenden Befehle auf die einzelnen Befehlsausgeber
- Bearbeitung von System- und Systemfehlermeldungen
- Aktivierung der zugelassenen Befehle aus den einzelnen Fernübertragungsstrecken
usw.

Die vorstehend aufgeführten Daten und Parameterwerte werden bei Neuinstallation eines Systems voreingestellt geliefert. Die entsprechenden Bedienungen sind nur bei Änderungen und Erweiterungen während des Betriebs erforderlich.

### 7.3 Überwachung aus mehreren Netzleitstellen

In der Praxis ist es häufig erforderlich, die Informationen aus einer Hochspannungsschaltanlage insgesamt, oder ausgewählte Teile davon, verschiedenen Netzleitstellen oder Partnerunternehmen zur erfügung zu stellen. Dieses wird in der bisherigen Technik durch Meldungs- und Meßwertabriegelungen (Meldungs-Zwischenrelais, Meßwert-Trennverstärker) erreicht. Das hier vorgestellte Fernwirksystem ermöglicht die Überwachung und Steuerung einer Schaltanlage aus bis zu vier verschiedenen Netzleitstellen. Über feste Zuordnungen werden die Zugriffsberechtigungen der einzelnen Netzleitstellen auf die Schaltanlage verwaltet. Hierbei kann eine Verwaltung der übergeordneten Hauptschaltberechtigung erfolgen. Auch kann die Schaltberechtigung auf ausgewählte Schaltfelder oder ausgewählte Schaltgeräte vorgesehen werden. Vom System zugelassen sind Umschaltalgorithmen, die es ermöglichen, daß die Hauptschaltberechtigung von einer Netzleitstelle auf eine andere übertragen wird. Eine solche Übertragung der Hauptschaltberechtigung ist durch besondere Maßnahmen der zu aktivierenden Netzleitstelle, die weiter unten erläutert werden, auch dann möglich, wenn Übertragungswege von und zu den anderen Netzleitstellen ausgefallen oder gestört sind. (Besondere Umschaltalgorithmen bei Doppelrechnersystem sh. Abschnitt 29.)

### 8. Fernübertragungseinheit

Die Fernübertragungseinheiten übernehmen den nachrichtentechnischen Informationsaustausch mit den entfernten Netzleitstellen (sh. Figur 3). Hierzu übergibt der zentrale Steuerrechner die für die Jeweilige Fernübertragungseinheit vorgesehenen Informationen.
Die Fernübertragungseinheiten verpacken diese Informationen in standardisierte, synchron zu übertragende Formate der Datenverarbeitung. Hierbei erfolgt eine Überwachung der Übertragungskanäle und im Störungsfalle für Melde- und Befehlsrichtung eine Wiederholung der gestörten Informationen (Codesicherung). Empfangene Befehle werden von den Fernübertragungseinheiten an den zentralen Steuerrechner weitergereicht.

### 9. Datenfluß in den feldbezogenen Einrichtungen

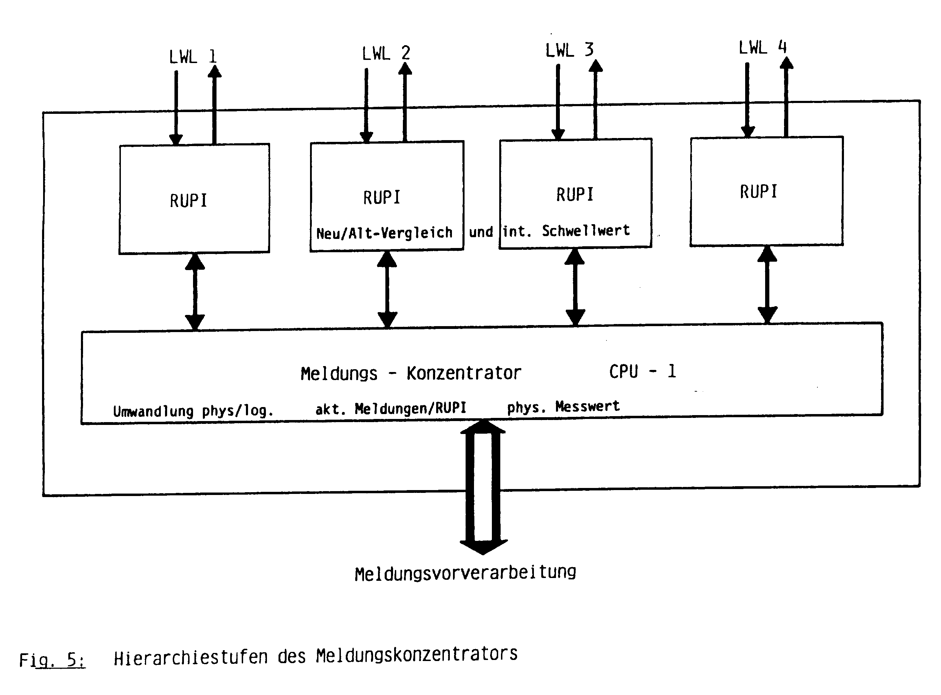

Der nachfolgend beschriebene Datenfluß in einer feldbezogenen Einrichtung ist dargestellt in Figur 4. Die im Meldungskonzentrator aus dem jeweiligen Neu-Alt-Vergleich der eingegangenen Meldungen erkannten neuen Informationen bzw. Meßwerte und die vom Prozeßmodul kommenden internen Meldungen (Systemmeldungen) werden in den der jeweiligen Informationsart zugeordneten Eingangspuffer eingeschrieben.
Der Meldungskonzentrator ist in der Lage, die Informationen aus 4 Prozeßmodulen parallel in Echtzeit zu verarbeiten. Der Meldungskonzentrator ist hierbei in einer 2-stufigen Hierarchie aufgebaut (Figur 5). In der ersten Hierarchiestufe sind jeder LWL-Strecke intelligente Vorprozessoren (Remote Unit for Peripheral Interface = RUPI) zugeordnet. Diese Vorprozessoren decodieren die eintreffenden Informationspakete bzgl. ihres Informationsinhaltes:
Neu-Alt-Vergleich,
integrierende Schwellwertbildung.

Eventuell im Informationspaket enthaltene Systemrückmeldungen werden als solche erkannt und von Meßwerten und Meldungen getrennt. Die Systemrückmeldungen beinhalten im wesentlichen Fehlermeldungen, welche von Fehlern während einer Befehlsausgabe im Prozeßmodul stammen. Von der ersten Hierarchiestufe werden somit beispielsweise 3 Meldungstypen (sh. Figur 4) interruptgesteuert, pollinggesteuert oder ähnlich, an die 2. Hierarchiestufe weitergegeben. In der 2. Hierarchiestufe wird die Umwandlung der physikalischen Klemmennummer des Prozeßmoduls in die logische Informationsnummer des gesamten Informationssystems durchgeführt. Meßwerte werden derart umgewandelt, daß die bis hier verwendete interne Prozentdarstellung in den physikalischen Meßwert mit Dimensionsangabe umgesetzt wird. Systemmeldungen erfordern keine weitere Umwandlung. Die so gewonnenen Informationen werden in einen der drei Empfangspuffer der 2. Hierarchie-Stufe eingeschrieben. Dort werden beispielsweise 4 Informationstypen unterschieden (Meßwerte und Zählerstände, Meldungen, Systemmeldungen; sh. Figur 4).

Im Prozeßmodul werden zyklisch alle Klemmen und Meßwertaufnehmer abgefragt. Zur wirksamen Unterdrückung kurzzeitiger Störungen werden alle Meldungseingaben durch Firmware entprellt. Diese Entprellzeit ist beispielsweise auf 6 ms eingestellt. Nach Jeweils 6 ms werden die so entprellten Meldungseingänge innerhalb 350 Mikrosekunden an den nachgeschalteten Konzentrator weitergegeben. Diese Weitergabe erfolgt durch ein Informationspaket. Das Format dieses Informationspaketes wird in Abschnitt 20.1 ausführlich weiter unten beschrieben. In solche Informationspakete werden zyklisch nacheinander die 4 Meßwerte des Prozeßmoduls eingebettet. Jedes Bit einer Zählerstandsübertragung wird auf dieser Ebene wie ein normales Meldungsbit behandelt.

In der Befehlsrichtung werden die zu übertragenden Befehle vom Steuerrechner an das Befehlsübertragungsmodul weitergegeben Das Befehlsübertragungsmodul ist Bestandteil des Meldungskonzentrators. Über Lichtwellenleiter werden die Befehle von den Befehlsübertragungsmodulen an das Prozeßmodul weitergegeben. Dort werden die Befehle vom Befehlsausgeber empfangen, überprüft und bei Fehlerfreiheit auf die Endrelais ausgegeben.

### 10. Schutzalgorithmen der Befehlsausgeber

Der Befehlsausgeber ist ein Bestandteil des Prozeßmoduls. Er wird von der Befehlsübertragungseinheit über Lichtwellenleiter angesteuert Die Befehlsüberfragungseinheit ist Bestandteil des Meldungskonzentrators.
Nach Überprüfung der eingegangenen Befehle auf formale übertragungstechnische Richtigkeit, erfolgt eine Überprüfung, ob dieser Befehl für den jeweiligen Befehlsausgeber richtig zugeordnet ist.

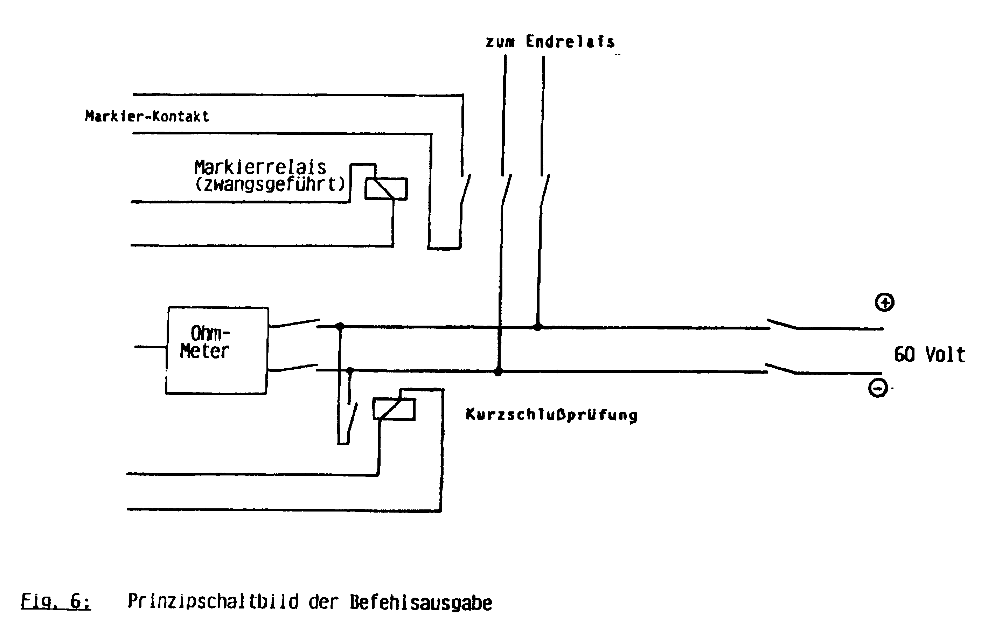

Figur 6 zeigt den schaltungstechnischen Aufbau der in einer Befehlsausgabeeinrichtung enthaltenen Schutzeinrichtungen. Soll eine Befehlsausgabe erfolgen, so wird in einem ersten Schritt die Befehlsausgabeeinheit selbst überprüft. Hierzu wird der Widerstand der Spannungsversorgungsschiene für die Befehlsausgabe über ein Ohm-Meter gemessen. In diesem Zeitpunkt darf bei ungestörter Befehlsausgabeeinrichtung kein Markierrelais angezogen haben. Das Ergebnis der Widerstandsmessung muß "Leerlauf" oder den Wert "unendlich" ergeben. In einem zweiten Schritt wird die Spannungsversorgungsschiene der Befehlsausgabe künstlich kurzgeschlossen und somit der Widerstand "Null" erzeugt, der vom aufprüfenden Ohm-Meter erfaßt werden muß. Damit ist die Funktion des Ohm-Meters überprüft. In einem weiteren Schritt wird das dem Steuerbefehl entsprechende Markierrelais gesetzt. Danach werden vom Prozessor des Befehlsausgebers die dritten Kontakte der Markierrelais abgefragt und damit festgestellt, welches Markierrelais tatsächlich angezogen hat. Hieraus ergibt sich eine 1 aus n Kontrolle und die Kontrolle, ob das erfaßte Markierrelais tatsächlich dem auszugebenden Befehl entspricht. Der erzeugte Kurzschluß auf der Spannungsversorgungsschiene der Befehlsausgabe wird weggenommen und am Ohm-Meter der Schleifenwiderstand der Befehlsausgabe einschließlich dem nun angeschalteten Steuer-Endrelais gemessen. Im nächsten Schritt wird der Kurzschluß wieder erzeugt um zu überprüfen, ob bei richtig funktionierenden Ohm-Meter nach der Widerstandsmessung des Schleifenwiderstands der Wert "Null" noch richtig erfaßt wird. Danach werden Ohm-Meter und Kurzschluß weggeschaltet Nach Abschluß dieser Überprüfungen ist sichergestellt, daß
1. nur ein Befehlsausgaberelais angezogen hat und
2. der Schleifenwiderstand der Befehlsausgabeschaltung einschließlich der in der Schaltanlage befindlichen Steuerendrelais innerhalb der vorgegebenen Toleranzen liegt.

Hierrach erfolgt die Befehlsausgabe durch Durchschaltung der Steuerspannung. Die eigentliche Befehlsausgabezeit kann pro Befehlsausgeber für alle Befehlsausgabeleitungen eingestellt werden. Da pro Schaltfeld 4 verschiedene Prozeßmodule angeschlossen werden können, sind somit pro Schaltfeld 4 verschiedene Befehlsausgabezeiten möglich. Die Befehlsausgabezeit kann zwischen 100 ms und 20 s frei gewählt werden. Der Befehlsausgeber verhindert das zeitliche Überlappen zweier Befehle: Folgt ein zweiter Befehl, solange der erste noch ansteht, so wird der zweite verworfen.

### 11. Generalabfrage

Die Generalabfrage (GA) dient dazu, bei System-Neustart den Gesamtzustand einer Schaltanlage an eine entfernte Netzleitstelle zu übertragen. Außerdem kann eine Generalabfrage über einen entsprechenden Befehl aus der entfernten Netzleitstelle angeregt werden, um z.B. bei System-Neustart in dieser Netzleitstelle den Schaltzustand einer Schaltanlage zu aktualisieren. Beide Ursachen für die Generalabfrage führen bei der hier beschriebenen Fernwirkübertragungseinrichtung zu nahezu den gleichen Abläufen.

Bei einer Generalabfrage werden alle in der 1. Konzentrationsebene (Meldungskonzentrator) anstehenden Informationen unabhängig vom Augenblick ihres Entstehens der Meldungsvorverarbeitung übergeben. In der Meldungsvorverarbeitung sind in diesem Falle alle Bildungsalgorithmen zur Bildung von übergeordneten Meldungen außer Funktion. Alle Informationen werden im Falle der GA in die hierfür vorgesehenen Meldungspuffer eingetragen. Diese Meldungspuffer sind groß genug um alle hierbei anfallenden Meldungen zwischenzuspeichern. Nach Eintragung der gesammelten GA-Meldungen in die Meldungspuffer wird die Meldungsvorverarbeitung wieder frei für neu eintreffende Meldungen.
Der zentrale Steuerrechner übernimmt aus den Meldungspuffern die aus der GA anstehenden Meldungen, kennzeichnet sie als solche und übergibt sie den Fernübertragungseinheiten zur Übermittlung an die entfernten Netzleitstellen. Bis hier führt die GA-Verarbeitung zu keiner nennenswerten Belastung der Einzelkomponenten der Unterstation. Die Fernübertragungseinheiten sind bei größeren Schaltanlagen durch die Übertragung der großen der GA entstammenden Informationsmenge für merkliche Zeit blockiert. Diese Erscheinung ist bekannt. Das hier vorgestellte System zeichnet sich durch 2 Merkmale aus, die dieser Blockierung der Übertragungswege entgegen wirken:
1. Da die Meldungsvorverarbeitung nach dem Eintragen der zu übertragenden Meldungen in die Meldungspuffer bereits wieder frei ist, können neu eintreffende Meldungen sofort erfaßt und bearbeitet werden. Vorgesehen ist, daß beim Eintreffen bestimmter, frei zu klassifizierender Meldungen die am Ausgang der Meldungsvorverarbeitung liegenden Meldungspuffer von GA-Meldungen freizumachen, indem die Meldungsvorverarbeitung den zentralen Steuerrechner auffordert, alle der GA entstammenden Meldungen zu verwerfen und nur noch aktuelle Meldungen zu übertragen. Als letzte Meldung einer so unterbrochenen GA wird vom zentralen Steuerrechner eine GA-Abbruchmeldung erzeugt und übertragen.
2. Da im Falle einer GA große Informationsmengen über die Fernübertragungseinheiten geschickt werden müssen, werden in der Meldungsvorverarbeitung Übertragungsformate gebildet, die ein Zusammenfassen aller Meldungen eines Schaltfeldes erlauben. Hieraus ergibt sich für beispielsweise 64 Meldungen eines Schaltfeldes eine Übertragungszeit von 3,8 s bei 200 Baud und 1,3 s bei 600 Baud und 0,6 s 1200 Baud.

Durch das unter dem vorstehenden Punkt 2 beschriebene Verfahren wird erreicht, daß Informationen, wie unter dem vorstehenden Punkt 1 beschrieben, spätestens nach der Übertragungsdauer für die Informationen eines Schaltfeldes zur Übertragung gelangen.
Diese Abläufe gelten bei Systemstart und bei aus der Ferne angeregter GA in gleicher Weise. Auch eine von der Bediengerät angeregte GA wird wie eine GA aus der Ferne bearbeitet.
Wird das System aus dem Stillstand hochgefahren, so sind weder in den einzelnen Schalffeldern zugeordneten Meldungskonzentratoren Alt-Neuvergleiche möglich, noch ist in der Netzleitstelle ein aktuelles Abbild der Schaltanlage verfügbar. Dieses Hochfahren dauert für das Gesamtsystem etwa 30 s. Während dieser Zeit auftretende Meldungen können nicht erfaßt werden. Nach diesen 30 s ist das System im eingeschwungenen Zustand und initiert eine System-GA, die sich in ihrer Form nicht von einer aus der Ferne angeregten GA unterscheidet. So ist sichergestellt, daß der aktuelle Zustand der Schaltanlage bereitgestellt wird.
Während des Normalbetriebs kann dem Informationsfluß eine langsame GA unterlagert werden. Die hierbei übertragenen Informationen sind durch ihren Informationstyp, als einer unterlagerten GA entstammend, erkennbar.

### 12. Prioritäten, Systemmeldungen

Das dargestellte Ausführungsbeispiel sieht neben den Meldungsarten (sh. Abschn. 19.2)
Echtzeitmeldungen,
logisch verknüpfte Meldungen,
Systemmeldungen,
Schaltermeldungen,
Meßwerte und
Zählwerten
drei parametrierbare Prioritätsebenen vor
(sh. Abschn. 6). Diesen Prioritätsebenen können zusätzliche Meldungen, d.h. neue Meldungen oder auch einzelne Meldungen und Informationen aus den vorstehend genannten Meldungsarten zugeordnet werden.
Die Grundeinstellung des Systems ordnet Systemmmeldungen die höchste Prioritätsstufe zu. Unter Systemmeldungen fallen solche Informationen, die Aufschluß über den Zustand des gesamten Informationssystems geben. Als Beispiele seien hier angeführt: Kanalfehler, Befehlsausgabefehler, system-interne Statusmeldungen.

### 13. Logisch verknüpfte Meldungen

Zur Bildung logisch verknüpfter Meldungen werden Einzelmeldungen z.B. 100 ms verzögert. Logisch verknüpfte Meldungen können deshalb nicht mit Echtzeit versehen werden. Die zu logisch verknüpften Meldungen gehörenden Einzelmeldungen jedoch sind bei Bedarf als Echtzeitmeldungen im System verfügbar (sh. Abschnitt 14: Zeitstempel).
In der bisher bekannten Fernwirktechnik werden alle Informationen 1 : 1, d.h. also Einzelinformation für Einzelinformation vom Umspannwerk zur entfernten Netzleitstelle übertragen. Dort wird aufgrund der Kenntnisse des Netzes bzw. der Anlagen im Umspannwerk erkannt, aufgrund welchen Vorganges bestimmte Meldungen abgesetzt wurden. Für bestimmte Meldungskombinationen z.B.
Stufenzeit 2
Schutzauslösung
Leistungsschalter AUS
läßt sich eine Meldung generieren mit der Aussage: "Feld wurde durch Schutz nach Stufenzeit 2 abgeschaltet". Es kommt dann nur eine solche verknüpfte Meldung zur Übertragung, wobei das System es zuläßt, danach für eine spätere Störungsaufklärung zeitunkritisch z.B. die Einzelmeldungen mit der hinzugefügten Echtzeit (also Zeitpunkt ihres tatsächlichen Auftretens) zu übertragen. Diese Meldungen sind dann als solche gekennzeichnet. Ein weiteres Beispiel ist eine Meldung, welche bei Vorhandensein eines auf sämtliche Leistungsschalter wirkenden Sammelschienenschutzes generiert wird, mit der Aussage "alle genannten Felder durch Sammelschienenschutz abgeschaltet". Die Einzelmeldungen der Leistungsschalter sind dann nicht unter zeit-kritischen Bedingungen zu übertragen, sondern werden zur späteren Störungsanalyse mit der Echtzeit zu einem geeigneten Zeitpunkt übermittelt.
Als letztes Beispiel sei der Ablauf einer Kurzunterbrechung angeführt. Die Übertragung der Information "erfolgreiche" oder "erfolglose" Kurzunterbrechung ist durch eine übergeordnete Meldung hinreichend beschrieben. In diesem Falle sind die nachstehend aufgeführten Einzelmeldungen zu erwarten: Schutzauslösung
Leistungsschalter EIN gehen
Leistungsschalter AUS kommen
KU-Automatik
Leistungsschalter AUS gehen
Leistungsschalter EIN kommen
Schutzauslösung
Leistungsschalter EIN gehen
Leistungsschalter AUS kommen
KU sperrt.

Das bedeutet bei einer Übertragungsgeschwindigkeit von nur 200 Baud und Einzelübertragung jeder Meldung eine Übertragungszeit von 3,7 s. Faßt man diese Meldungen in einem Meldungspaket zusammen ergibt sich eine Übertragungszeit von 0,87 s. Zusammengefaßt als logisch verknüpfte Sammelmeldung muß nur die Dauer einer einzigen Meldung nämlich 0,37 s angesetzt werden. Die entsprechenden Zeiten bei einer Übertragungsgeschwindigkeit von 600 Baud wären: 1,2 s (Einzelmeldung), 0,29 s (mehrere Meldungen in 1 Telegramm), 0,12 s (logisch verknüpfte Meldung). Vorgeschlagen werden pro Schaltfeld 8 derartig vom Anwender programmierbare, logisch verknüpfte Meldungen. Zusätzlich für die gesamte Schaltanlage 5 derartige logische Verknüpfungen.

Neben diesen vom Benutzer parametrierbaren logisch verknüpften Meldungen ist vom System bereits vorgesehen, erfolgreiche Bewegungen von Schaltgeräten von AUS nach EIN oder von EIN nach AUS als solche logisch verknüpfte Einzelmeldung zu übertragen. Da aber zunächst nicht generell angenommen werden kann, daß jeder Anwender eine derartige Zusammenfassung wünscht, wird in den nachfolgenden Abschnitten bei allen Zeitbetrachtungen der Übertragung von einer 2-poligen, d.h. also doppelten Übertragung von Schaltgeräteänderungen ausgegangen.

### 14. Meldungen mit Zeitpunkt ihres Auftretens (Echtzeitmeldungen).

Das System unterscheidet vorteilhaft 3 Arten von Meldungen:
1. Meldungen, die bei ihrem Auftreten schnellstmöglichst zu übertragen sind.
2. Meldungen, deren Zeitpunkt ihres Auftreten möglichst genau zu erfassen ist und die zeitunkritisch zu übertragen sind.
3. Meldungen, die bei ihrem Auftreten schnellstmöglichst zu übertragen sind. Der Zeitpunkt ihres Auftretens ist zusätzlich möglichst genau zu erfassen und kann dann in einer zweiten Meldung zeitunkritisch übertragen werden.

Die an den Meldungskonzentratoren anstehenden Meldungen können vom Anwender parametrierbar beliebig einer dieser 3 Meldungskategorien zugeordnet werden.

Da logische Meldungen aus mehreren Einzelmeldungen zusammengesetzt sind, kann an diesen auch wegen der vom System grundsätzlich vorgesehenen Verzögerungszeit von mindestens 100 ms der Augenblick des Auftretens nicht mehr nachgebildet werden, so daß für logisch verknüpfte Meldungen eine Echtzeitdarstellung nicht vorgesehen ist sondern diese sich auf die Einzelmeldungen beschränken muß (siehe Abschnitt 13).

Im Meldungskonzentrator wird jeder Meldung, auch wenn sie nur systemintern verarbeitet wird, ein sogenannter Zeitstempel aufgeprägt. Dieser Zeitstempel erlaubt eine Darstellung mit einer Auflösung von ca. 1 ms. Die dem Benutzer eröffnete Möglichkeit, Meldungen mit Echtzeit zu übertragen, bezieht sich nun auf die Verwendung, oder das Verwerfen dieses systemintern immer vorhandenen Zeitstempels. Bedingt durch den Entprellmechanismus in den Prozeßmodulen (6 ms Entprellzeit) und den Bearbeitungszeiten in den Meldungskonzentratoren beträgt die mittlere Genauigkeit in der Echtzeitdarstellung 3 ± 3 ms bezogen auf den absoluten Zeitpunkt des Auftretens einer Informationsänderung an der physikalischen Klemme des Prozeßmoduls.

### 15. Meßwerte

Meßwerte sind pro Schaltfeld beispielsweise 4 auftretende Analogwerte (Strom, Spannung, Wirkleistung, Blindleistung).
Diese Analogwerte können dem System als Gleichstromwerte angeboten werden, wobei dieser Gleichstromwert eine Prozentzahl des Maximalwertes darstellt. Hierbei sind positive und negative Stromrichtungen zulässig und auch vorgesehen. Als weitere Eingabemöglichkeit übernimmt das System Meßwerte (die z.B. in einem vorgeschalteten Meßwertgeber bereits in Digitalwerte umgeformt wurden) digital über einen sequentiellen Kanal. In den, den einzelnen Schalffeldern zugeordneten Meldungskonzentratoren sind die den Meßwerten zugeordneten Anpassungskennlinien hinterlegt. Aufgrund der bei der Systeminitialisierung einzurichtenden Anpassungslisten (Umsetztabellen) werden die Meßwerte in den Meldungskonzentratoren von den eingangsseitigen Prozentwerten in ihre tatsächlichen physikalischen Werte umgewandelt und, versehen mit ihrer physikalischen Dimension, für die weitere Übertragung bereitgestellt. Um Meßwerte nicht zyklisch übertragen zu müssen, wird über ein integrierendes Schwellwertverfahren jeder Meßwert überprüft und bei Erreichen der Übertragungskriterien in den 2. Empfangspuffer eingeschrieben und damit zur Übertragung vorbereitet.
Nach Wunsch des Anwenders kann mit Hilfe eines langsamen, dem Gesamtsystem unterlagerten Meßwertzyklusses sichergestellt werden, daß jeder Meßwert mindestens 1 mal innerhalb eines im z.B. Minutenbereich liegenden Zeitraumes zur Übertragung kommt.
Das für die Übertragung angewandte physikalische System beginnt bei den Grundgrößen 1 V (1,000 mal 10° V), 1 A (1,000 mal 10° A), 1 W (1,000 mal 10° W) und 1 VAR (1,000 mal 10° VAR) und endet bei 10¹⁵. Die Zahlendarstellung ist gekennzeichnet durch 1 signifikante Stelle vor dem Komma und 3 gültigen Stellen hinter dem Komma. Die entsprechende Skalierung auf den tatsächlichen Zahlenwert erfolgt durch den Zehnerexponenten. Hierbei werden für die Wirk- und Blindleistung grundsätzlich zwei gleich große positive und negative Darstellungsbereiche übertragen. Die physikalische Dimension wird mitübertragen.

### 16. Zählerstände

Jedes Einzelbit eines Zählerstands-Coders wird vom Prozeßmodul als Einzelinformation aufgenommen und dem nachgeschalteten Meldungskonzentrator übergeben.
Bei der Initialisierung des Systems werden im Meldungskonzentrator die für die Zählerstandsübertragung relevanten Klemmen festgelegt. Hierdurch wird sichergestellt, daß je nach Betriebsart bei einer Zählerstandsabfrage, oder bei einer spontanen Übertragung des Zählerstandes, alle zugehörigen Bits zur Übertragung gelangen.

Eine Zählerstandsübertragung kann z.B. auf dreierlei Weisen intitiert werden:
- durch Abfragebefehl aus der Ferne
- durch Änderung des Zählerstandes selbst
- zeitgesteuert in der Unterstation (z.B. DCF-77)
Optional kann jeder Zählerstandsübertragung die Echtzeit der Abfrage zugefügt werden. Bei einer Zählerstandsabfrage aus der Ferne werden die unter Abschnitt 11 angeführten Kriterien für die Gesamtzahl aller oder eine bestimmbare Auswahl von Zählerständen angewandt (Abbruchkriterium).

### 17. Fehlermeldungen

Unter den hier aufzuführenden Fehlermeldungen sind Meldungen des Informationserfassungs- und Übertragungssystems zu verstehen, da Fehler- und Störungsmeldungen der Hochspannungsanlage nicht als besonders zu behandelnde Informationen angesehen werden.
Fehlermeldungen gehören zum Gesamtkomplex der Systemmeldungen und informieren die Einrichtungen in der Ferne über Betriebsstörungen des Informationserfassungs- und Übertragungssystems sowie der Befehlsausgabe. Beispielhaft sei hier aufgeführt:
a) Meldekanalausfall (Nummer des Prozeßmoduls, Feldnummer, Umspannwerksnummer)
b) Kanalausfall Befehlsrichtung (Prozeßmodul, Feldnummer, Umspannwerksnummer)
c) nicht erkannter Befehl (Impulsfehler) Abweichend von der bisher erkannten Impulsfehler-Auswertung wird im hier vorgestellten System über feste Zeitspannen die Kanalgüte in Befehlsrichtung ermittelt und übertragen (siehe Abschnitt 29: Bestimmung der Kanalgüte in Befehlsrichtung).
d) Befehlsausgabefehler (Stromschleife, Fehler im Bereich der Markierungsrelais, nicht generierter Befehl).
e) system interner Fehlerstatus

### 18. Übertragungszeiten

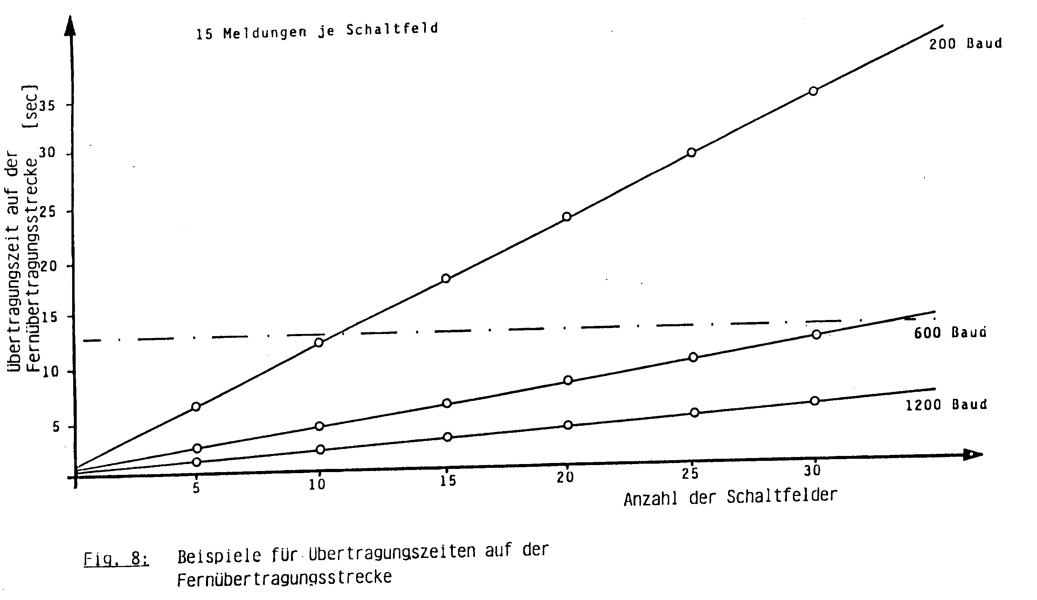

Nachstehend werden Übertragungszeiten für Übertragungsgeschwindigkeiten zwischen 200 und 1.200 Bit/s angegeben. Dabei wird davon ausgegangen, daß bei grossen Umspannwerken ( >20 Schaltfelder) die dort vorhandenen fernmeldetechnischen Einrichtungen Übertragungsgeschwindigkeiten von 1.200 Baud zulassen, während die Informationen aus kleinen Umspannwerken ( <5 Schaltfelder) mit Rücksicht auf mögliche Engpässe bei der Übertragungstechnik mit 200 Baud ausreichend schnell übertragen werden können (sh. hierzu Figur 8).

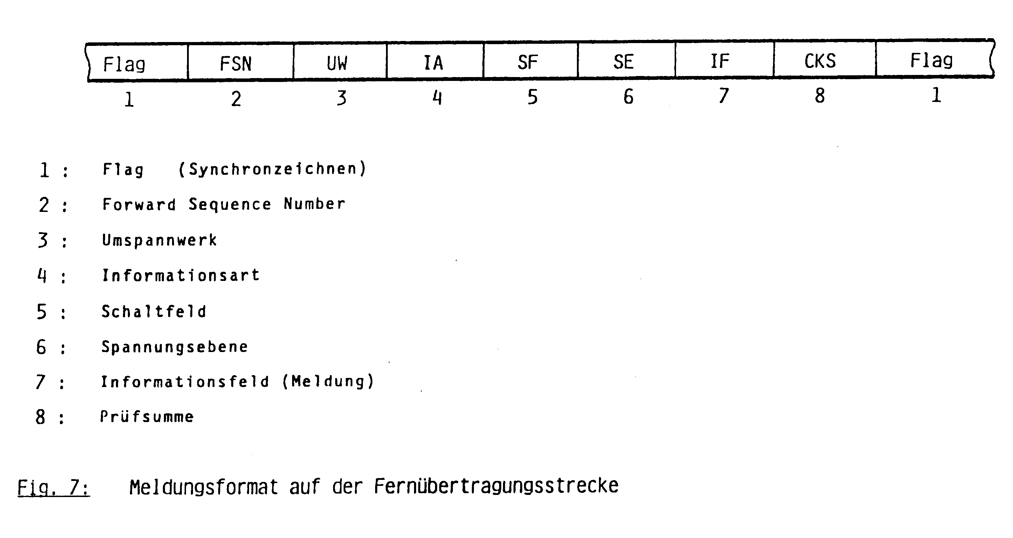

Die im System auftretenden Übertragungszeiten basieren im wesentlichen auf den Übertragungsprotokollen, welche auf den jeweiligen Übertragungsabschnitten eingesetzt werden. Rechnerinterne Bearbeitungszeiten werden nicht berücksichtigt. Sie liegen im Mikrosekundenbereich und haben somit keinen nennenswerten Anteil an der Gesamtübertragungszeit. Das auf den Übertragungsabschnitten zwischen den fernwirktechnischen Einrichtungen im Umspannwerk und der dazugehörigen Netzleitstelle eingesetzte Übertragungsformat basiert auf der synchronen HDLC-Übertragung. Jede andere synchrone oder asynchrone BitÜbertragungsart ist ebenfalls möglich. Die folgenden Ausführungen lehnen sich beispielhaft an die HDLC-Spezifikation an. Die zwischen zwei Synchronzeichen (Flag) eingebettete Nutzinformation besteht für eine Einzelmeldung aus 59 Bit, welche für die Codierung der Schaltfeldnummer, dem Typ des Informationspaketes (Informationsart), der Umspannwerknummer, der Spannungsebene und einer internen Nummerierungsvariablen herangezogen werden (sh. Figur 7). Die eigentliche Meldungsinformation ist mit 11 Bit codiert (Einzelmeldung). D.h. bei 200 Baud Übertragungsgeschwindigkeit werden für die Übertragung einer Meldung 0,37 Sekunden benötigt. Die Architektur der Informationspakete ist derart aufgebaut, daß bis zu 64 Meldungen innerhalb eines Informationspaketes eingebettet werden können. Die für ein solches Informationspaket benötigte Übertragungszeit beträgt dann 3,8 Sekunden bei 200 Baud. Meldungen eines Schaltfeldes können so innerhalb eines Informationspaketes zusammengefaßt werden. Für die unterschiedlichen Übertragungsgeschwindigkeiten wie 200 Baud, 600 Baud und 1.200 Baud sind die für die jeweils eingebetteten Meldungen die dafür benötigten Übertragungszeiten in Figur 8 dargestellt. Fallen z.B. aus vier Schaltfeldern je 15 Meldungen an (Großstörung), so werden hierbei für die Übertragung dieser 60 Meldungen bei 200 Baud 4,5 Sekunden, bei 600 Baud 1,5 Sekunden und bei 1.200 Baud 0,7 Sekunden Übertragungszeit benötigt.

### 19. Übertragungsformate

### 19.1 Interne Lichtwellenleiter-Schnittstelle

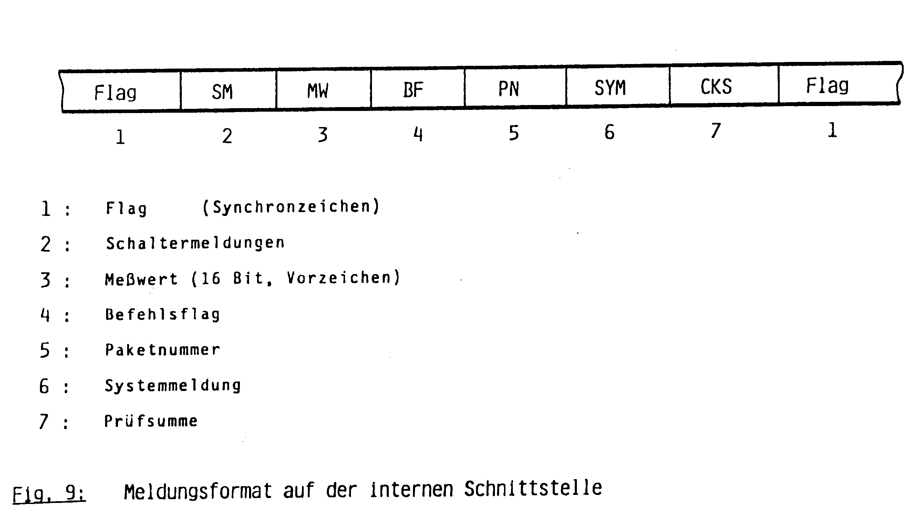

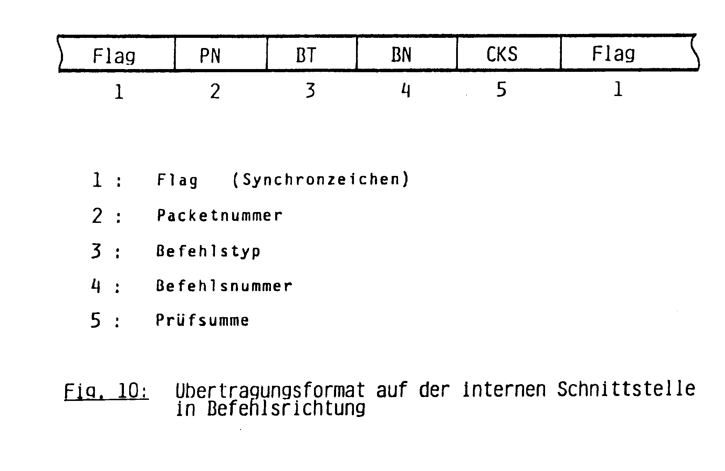

Das auf der internen Schnittstelle eingesetzte Übertragungsformat basiert auf den bekannten SDLC-Übertragungsprotokollen. Als interne Schnittstelle ist hierbei die Lichtwellenleiterverbindung zwischen dem Meldungskonzentrator und dem Prozeßmodul zu verstehen. Die SDLC-Übertragungsprotokolle beinhalten eine synchrone Byte-Übertragung. Das Information-Field besteht bei der Melderichtung aus 4 Byte einpoligen Meldungen (welche jeweils paarweise für Schaltgerätestellungsmeldungen zusammengefaßt werden können oder zur Übertragung der Zählerstände nutzbar sind), 3 Byte für die Übertragung von jeweils einem von vier dem Feld zugeordneten Meßwerten und 3 Byte für Systemmeldungen vom Prozeßmodul (interne Schnittstellensignalisierung). Die Länge eines Übertragungspaketes in Melderichtung auf der internen Schnittstelle ergibt sich hiermit zu 10 Byte.
Einschließlich der notwendigen SDLC-Formatinformationen von 4 Byte ergibt sich eine Gesamtpaketlänge von 14 Byte (112 Bit). Bei der vorliegenden Ausführungsform, die in diesem Bereich eine Übertragungsgeschwindigkeit von 375 kBit/s hat, ergibt sich eine Übertragungszeit von 299 Mikrosekunden (sh. Figur 9). In Befehlsrichtung besteht das Information-Field des SDLC-Übertragungspaketes aus einer logischen Paketnummer (1 Byte), dem Befehlstyp dieses Informationspaketes (1 Byte) und dem eigentlichen Befehl (1 Byte; sh. Figur 10). Dies bedeutet eine Gesamtpaketlänge einschließlich der notwendigen SDLC-Formatinformationen von 7 Byte (56 Bit), was zu einer Übertragungszeit von 149 Mikrosekunden führt.
In Befehlsrichtung wird von dem Befehlsübertragungsmodul innerhalb des Meldungskonzentrators jeder Befehl zweimal in Richtung Prozeßmodul über die LWL-Strecke gesendet. Beim Empfänger wird eine 2-aus-2-Kontrolle durchgeführt. Dies bedeutet, daß ein Befehl als solcher nur dann akzeptiert wird, wenn 2 sequentiell empfangene Informationspakete ein und denselben Befehl darstellen. Zur Sicherung dieser beiden sequentiellen Informationspakete wird eine Zeitüberwachung durchgeführt. Trifft nicht innerhalb 100 ms das zweite Informationspaket im Prozeßmodul ein, so wird das zuerst empfangene Informationspaket verworfen. Damit wird sichergestellt, daß nicht nach längerer Zeit aus mehreren Bruchstücken von Befehlen ein neuer Befehl entsteht.

### 19.2 Fernübertragungsstrecke

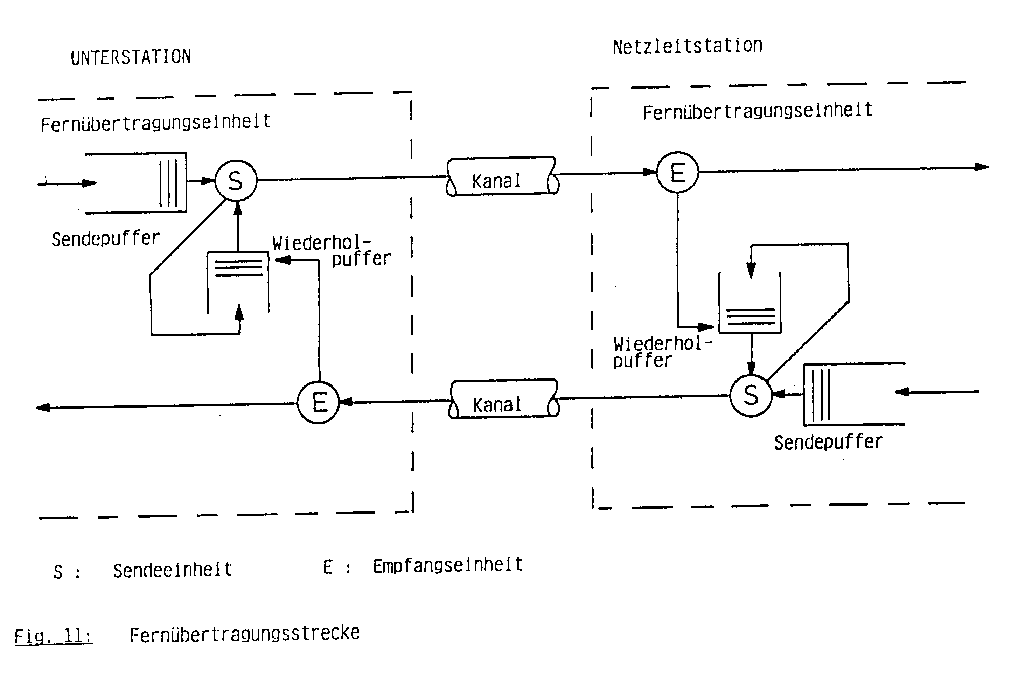

Das HDLC-Protokoll wurde dahingehend modifiziert, daß kein Adress- und Control-Field-Teil verwendet wird. Der Aufbau eines Informationspaketes auf der Fernübertragungsstrecke ist in Figur 7 und Figur 11 dargestellt. Das Information-Field besteht aus einer Forward-Sequence-Number, der Umspannwerknummer UW, Informationsart des Information-Fields, der Schaltfeldnummer, der Spannungsebene sowie einem variablen Block, in welchem die Meldungsnummern oder Befehle (eine oder mehrere) eingebettet sind. Einschließlich den Signalisierungsflags zu Beginn und zum Ende eines Informationspaketes und ausschließlich variablem Block für das Information-Field besteht damit ein Informationspaket aus 52 - 73 Bit. Für z.B. Jede Meldungsnummer einer Einselmeldung muß diese Anzahl um 5 - 15 Bit erhöht werden. Man kann beispielhaft folgende Informationsarten unterscheiden:

| Informationsart | Bevorzugte Bereiche von Int.-Field-Längen (Bit) |
|---|---|
| - Einzelmeldungen (Meldungsnummern) | 5 - 15 |
| - Einzelmeldung mit Uhrzeit | 35 - 50 |
| - Meßwerte | 10 - 25 |
| - Zählerstände mit Uhrzeit | 50 - 90 |
| - systeminterne Quittierungsmeldungen für die Fernübertragungsstrecke | 5 - 15 |
| - Befehlsempfangsmeldung | 5 - 15 |
| - systeminterne Fehlermeldungen | 5 - 15 |
| - logisch verknüpfte Meldungen (generiert durch die Meldungsvorverarbeitung) | 5 - 15 |
| - Generalabfrage (abbrechbar) Je Schaltfeld beispielsweise 64 Meldungen zu je 5 - 15 Bit im Mittel ca. | 700 |
| - unterlagerte Generalabtrage | 5 - 15 |
| - GA-Abbruchmeldung | 5 - 15 |
| - Sollwertvorgabe | 30- 65 |
| - Betriebsmeldungen (Klartext). | 20 - 80 |
| - Befehle | 5 - 15 |
| - Systembefehle (anwenderbezogen) | 5 - 15 |
| - systeminterne Befehle | 5 - 15 |
| - klassifizierte Meßwerte (sh. Abschnitt 30) pro Schaltfeld | 5 - 15 |
| - Trafo-Stufenstellungen | 5 - 15 |

### 20. Gesicherte Informationsübertragung

### 20.1 Interne Lichtwellenleiter-Schnittstelle

Auf der internen Schnittstelle werden sowohl in Befehlsrichtung wie in Melderichtung SDLC-Protokolle eingesetzt. Andere Bit-Übertragungsprozeduren (asynchron, synchron) können ebenfalls eingesetzt werden. Diese SDLC-Protokolle werden auf übertragungstechnischer Seite durch 16 Prüfbit je Informationspaket gesichert. Diese 16 Bit Codesicherung werden durch ein Generatorpolynom 16. Grades ermittelt. Dieses Polynom ist der Klasse der Abramson-Code zuzuordnen. Abramson-Code besitzen den Vorteil, daß sie gegenüber den Codesicherungsverfahren mit Generatrpolynomen eines bestimmten Grades K und der Eigenschaft "primitiv" eine höhere Haming-Distanz besitzen. Das hier eingesetzte Generatorpolynom 16. Grades besitzt die Haming-Distanz h = 4. Durch Verwendung intelligenter Schnitfstellencontroller ist es in dem hier vorgestelltem System möglich, bei Bedarf andere Generatorpolynome einzusetzen (z.B. Firecode, Bose-Chauduri-Code). Die Flexibilität des Systems erlaubt es, an dieser Stelle mit einer Erweiterung weniger Bits ( <5) Haming-Distanzen >10 zu realisieren. Durch den Einsatz der eingeschränkten Codewortlänge ist gewährleistet, daß durch einen eventuellen Versatz von einem Bit bei dieser Art von SDLC-Übertragungen mit Codesicherung kein neues Codewort entstehen kann (siehe hierzu "Codes für Fehlererkennung und Fehlerkorrektur", Professor Dr. Tech. Swoboda, GH Siegen, Oldenborgverlag, München Wien, 1973 ISBN 3-486-39317-5). Zusätzlich zu den Codesicherungsverfahren werden die in Befehlsrichtung ausgesendeten Informationspakete mit einer logischen Paketnummer versehen (siehe Abschnitt 19). Dieser Vorgang entspricht im wesentlichen der bekannten Forward-Sequence-Number.

In jedem Informationspaket der Melderichtung ist eine Rückantwort für die Befehlsrichtung enthalten. Sie beinhaltet die logische Paketnummer der Befehlsrichtung sowie eine Aussage über den durchgeführten Befehl bzw. erkannten Fehler durch das Prozeßmodul. Die Befehlsüberfragungseinheit erhält somit die Kenntnis, welcher Befehl vom Befehlsausgeber ohne übertragungstechnische Fehler empfangen wurde und ob dieser Befehl ausgeführt oder abgebrochen wurde, weil einer der Schutzalgorithmen der Befehlsausgabe angesprochen hat (siehe Abschnitt 10).

### 20.2 Fernübertragungsstrecke

Auf der Fernübertragungsstrecke wird ein auf HDLC-Spezifikationen basierendes Übertragungsprotokoll eingesetzt.

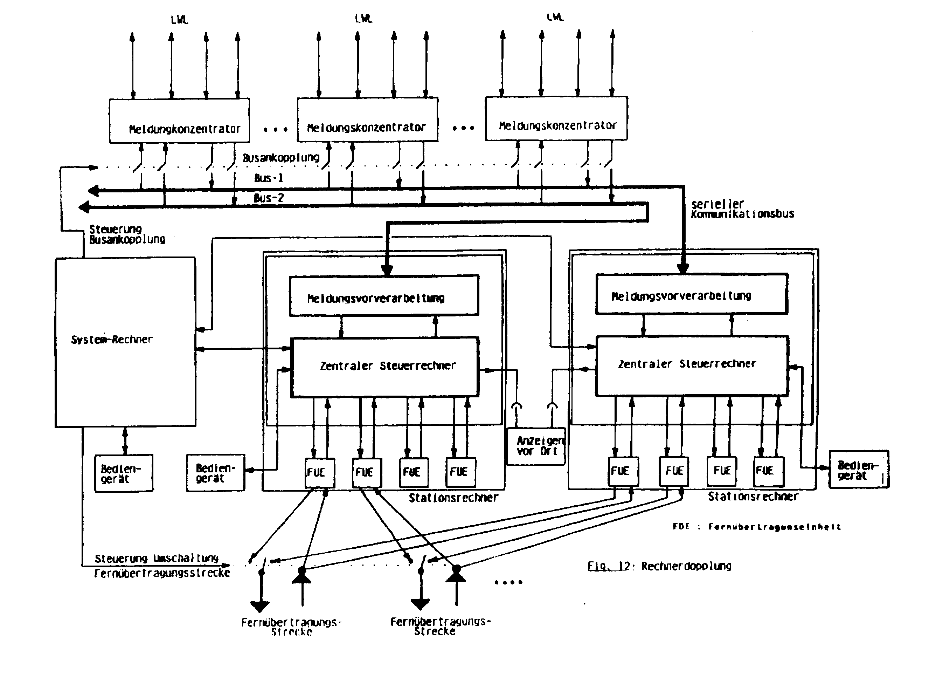

Bezüglich der Codesicherungsverfahren auf der übertragungstechnischen Seite werden dieselben Sicherungsalgorithmen, wie bereits unter Abschnitt 20.1 beschrieben, eingesetzt. Dies bedeutet, daß auch auf der Fernübertragungsstrecke eine Haming-Distanz mit h = 4 realisiert ist. Eine Erweiterung auf größere Haming-Distanzen ist vorgesehen und möglich. Jedes Information-Field beinhaltet, wie bereits in Abschnitt 19 aufgeführt, die sogenannte Forward-Sequence-Number. Mit Hilfe dieser Durchnumerierung in Vorwärtsrichtung und der Unterscheidung in Nutzpakete und Kanalbestätigungspakete wird ein Sicherungsalgorithmus realisiert, welcher dem von CCITT No. 7 ähnelt (Die Fernübertragungseinheit entspricht weitgehend Level 2 von CCITT No. 7). Meldungen des zentralen Steuerrechners werden an die Fernübertragungseinheit übergeben. Dies ist ein eigenständiges Modul, welches nach Erhalt der Meldungen vom zentralen Steuerrechner diese eigenständig weiterbearbeitet. Das in dem hier vorgestellten System eingesetzte Wiederholverfahren ähnelt dem bei CCITT No. 7 definierten PCR-Verfahren. Meldungen des zentralen Steuerrechners, weitergegeben an die Fernübertragungseinheit, werden von dieser auf die Übertragungsstrecke ausgegeben. Gleichzeitig erfolgt ein Eintrag in einen Wiederholpuffer (sh. Figur 12). Die einzelnen Informationspakete werden zyklisch durchnumeriert. Beispielsweise können 256 Pakete in sequentieller Reihenfolge durchnumeriert werden. Jedes Paket, welches von der Fernübertragungseinheit an die Netzleitstelle ausgesendet wurde, wird von dieser bei ordnungsgemäßem Empfang mit Hilfe von Bestätigungstelegrammen in der Befehlsrichtung quittiert. Wurde ein Informationspaket nicht ordnungsgemäß empfangen, so sendet die Netzleitstelle kein Bestätigungspaket zurück. Da Jeder Netzleitstelle eine Fernübertragungsstrecke und damit eine ganz bestimmte Fernübertragungseinheit zugeordnet ist, können Konflikffälle für diesen Fall nicht auftreten. Liegen keine weiteren Meldungen vom zentralen Steuerrechner an, so werden die noch im Wiederholpuffer anstehenden Meldungen durch die Fernübertragungseinheit erneut in Melderichtung ausgesendet und sind als Wiederholmeldungen gekennzeichnet. Ein Herausnehmen aus dem Wiederholpuffer erfolgt immer dann, wenn mit Hilfe der Befehlsrichtung von der Netzleitstelle die entsprechende Nummer des zuletzt fehlerfrei empfangenen Informationspaketes bestätigt wurde.
Damit ist sichergestellt, daß der Wiederholpuffer auf dem schnellsten Wege geleert werden kann und es nicht unnötigerweise zu Wiederholungen kommt. Außerdem wird erreicht, daß bei Ausfall einer Richtung ein funktionsgerechtes Arbeiten der anderen Richtung nicht beeinträchtigt wird. Mit vertretbarem Aufwand läßt sich fast jede beliebige Größe des Wiederholpuffers realisieren. Vorteilhaft werden maximal ca. 200 Meldungen im Wiederholpuffer zwischengespeichert.

Kommt es zu einem Überlauf im Meldungswiederholpuffer, so werden alle dort stehenden Meldungen gelöscht, da ab diesem Zeitpunkt der logische Zusammenhang zwischen Kommen und Gehen von Meldungen nicht mehr gewährleistet ist. Alle ab diesem Zeitpunkt in die Ferne übertragenen Meldungen sind mit einer Meldungspufferüberlaufkenung versehen. Die Zählung der Forward-Sequence-Nummern beginnt erneut bei 0 modulo 256. Nach Überschreiten dieser Nummer bzw. nach erneutem Überlauf wird der Meldungspuffer wieder geleert und die Zählung beginnt erneut bei Forward-Sequence-Nummer 0. Sobald der Befehlskanal für Quittierungszwecke wieder zur Verfügung steht, wird über einen Rückstellbefehl die Überlaufkennzeichnung weggenommen und der normale Übertragungsalgorithmus beginnt.
Der Zustand der Schaltanlage nach einem derartigen Überlauf wird durch eine aus der Ferne initierte GA abgefragt.

### 21. Erweiterung der Prozeßmodule für extrem hohe Echtzeitauflösung

Für extrem hohe Echtzeitauflösung kann es notwendig sein, das Hinzufügen der Echtzeitinformation an die eigentliche Änderungsmeldung bereits im Prozeßmodul durchzuführen. Hierzu wird in jedem Meldungsaufnehmer eine hochauflösende (DCF-77-) gesteuerte Echtzeituhr eingesetzt. Die im Prozeßmodul eingesetzte Echtzeitreferenz wird aus wirtschaftlichen Erwägungen von einem DCF-77-Normalzeitempfänger im zentralen Erfassungssystem geführt. Diese Führung wird mit Hilfe der Befehlsrichtung, d.h. des LWL-Kanals von den Befehlsübertragungsmodulen der Meldungskonzentratoren zu den Befehlsausgebermodulen der Prozeßmodule durchgeführt. Durch einen speziellen Hardwarezusatz wird ein Zeit-Synchronisiersignal (konflikffrei zu der normalen Befehlsübertragung) auf den LWL-Kanal am Befehlsübertragungsmodul eingespeist. Eine spezielle Hardware bes Prozeßmoduls entnimmt dieses Zeit-Synchronisiersignal direkt aus dem LWL-Kanal und steuert die in ihm eingesetzte Echtzeituhr. Die im Prozeßmodul eingesetzte Uhr benötigt somit nur eine hohe Kurzzeitstabilität und keine hohe Langzeitstabilität. Die mit einer Kurzzeitstabilität von 10⁻⁶ gesteuerte Echtzeituhr im Meldungaufnehmer wird periodisch jede Minute derart synchronisiert. Sollte zu diesem Zeitpunkt soeben ein Befehl von dem Befehlsüberfragungsmodul an den Befehlsausgeber des Prozeßmoduls übertragen werden, so verhindert eine spezielle Verriegelungslogik des Befehlsübertragungsmoduls ein Aussenden dieses Synchronisierzeichens. Dies hat zur Folge, daß das nächste Synchronisiersignal erst nach z.B. 2 Minuten erneut im Prozeßmodul eintreffen wird. Bezogen auf die Kurzzeitstabilität von 10⁻⁶ der im Prozeßmodul eingesetzten Echtzeituhr, ist der Ausfall eines oder sogar mehrerer Synchronisierzeichen ohne Bedeutung. Beim Eintreffen des nächsten Synchronzeichens wird automatisch die vollständige Sychronität erreicht. Mit dieser Maßnahme läßt sich eine Echtzeitauflösung der Informationsänderungen <100 Mikrosekunden erreichen.

### 22. Systemkonfigurierung

### 22.1 Logische Systemebene

Während der Systemanalyse vor der Projektierungsphase werden zwischen Anwender und Hersteller Werte für die Grundeinstellung des Systems (Default-Werte) vereinbart. Mit diesen Grundeinstellungen erfolgt die Inbetriebnahme des Systems.
Wenn sich aufgrund von Erweiterungen oder Umbauten Änderungen des Systems ergeben, so können über das am zentralen Steuerrechner anschließbare Bediengerät diese Grundeinstellungswerte geändert werden. Hierbei erfolgt über die Bedienkonsole eine interaktive Menuesteuerung. Es ist vorgesehen, daß die Parametrierung der nachstehend aufgelisteten Funktionen durch einen Password-Schutz in verschiedenen Berechtigungsebenen gesteuert wird. Diese Ebenen sind hierarchisch gegliedert. Jede niederere Ebene kann nur eine Untermenge der Möglichkeiten der direkt höheren Ebene beeinflussen.

### 22.2 Systemausbau

Auf der hardware-nahen Ebene sind parametrierbar und nachfolgend beispielhaft aufgeführt:
1. Festlegung des Systemausbaus in der Peripherie bzw. Bedienungsebene, wie z.B. Drucker, Externspeicher, Anzeigen vor Ort, Anzahl der pro Meldungskonzentrator angeschlossenen Prozeßmodulen, Anzahl der aktiven Fernübertragungseinheiten
2. Einstellung der Übertragungsgeschwindigkeiten für die einzelnen Fernübertragungseinheiten
3. Festlegung der Art und der Bedingungen für die Übertragung von systeminternen Meldungen in die Ferne.
4. Zuordnung der physikalischen Einheiten zu den einzelnen Meßwerten der verschiedenen Prozeßmodule.

Eine Anpassung an bestehende Netzleitstellen, welche für ein altes Telegrammformat eingerichtet sind geschieht derart, daß die Fernübertragungeinheiten die Fernwirktelegramme so nachbilden, daß sie von der nachgeschalteten Netzleitstelle verstanden werden. Die in den Meldungskonzentratoren der Meldungsvorverarbeitung und dem zentralen Steuerrechner eingesetzte Firmware unterstützt in diesem Fall nur die in den alten FW-Sytemen eingesetzten Möglichkeiten (sh. Abschnitt 29: Doppelrechner).

### 23. Systemgröße

Das hier dargestellte Ausführungsbeispiel eines Fernwirksystems ist in seinem Aufbau stark technologisch strukturiert und damit feldorientiert. Jedem Schaltfeld ist ein Meldungskonzentrator zugeordnet, der den Anschluß von 4 getrennten Prozeßmodulen gestattet. Jedes Prozeßmodul ist mit 32 Eingangsklemmen versehen, von denen jede eine Meldeleitung (hier 1 Bit) zu erfassen vermag. Außerdem sind pro Prozeßmodul 4 Meßwerteingänge vorgesehen. Rein rechnerisch ergeben sich max. 128 mögliche Einzelbitinformationen und 16 Meßwerte pro Schaltfeld. Tatsächlich werden durch den Konzentrator pro Schaltfeld nur max. 64 Einzelbitinformationen und 4 Meßwerte verarbeitet. Die Einzelbitinformationen können freizügig entweder (max. 32) zweipoligen Schaltgerätestellungsmeldungen, Einzelmeldungen oder Zählerstandswerten zugeordnet werden. Eine Unterscheidung der Einzelmeldungen in Kenn-, Warn-, Schutz- und Wischermeldungen ist nicht erforderlich. Wenn in Sonderfällen aus einem einzelnen Schaltfeld Informationen in besonders großem Umfang zu erfassen sind, so besteht die Möglichkeit, einem Schaltfeld zwei oder mehr Meldungskonzentratoren im System zuzuordnen. Der mit dem Meldungsaufnehmer zusammen das Prozeßmodul bildende Befehlsausgeber läßt 16 Einzelbefehle, bzw. 8 zweipolige Schaltgerätebefehle zu. Bei Ausnutzung aller 4 pro Feld einsetzbaren Prozeßmodule sind also insgesamt 64 Einzelbefehle bzw. 32 zweipolige Befehle für Schaltgeräte oder jedes andere geradzahlige Mischungsverhältnis möglich.
Zur Aufbereitung der vom Meldungskonzentrator empfangenen Informationen werden diese an die Meldungsvorverarbeitung übergeben. Eine Einheit der Meldungsvorverarbeitung ist in der Lage, den Informationsfluß aus bis zu 32 Meldungskonzentratoren zu verarbeiten und weiterzugeben. (Maximal sind 256 Meldungskonzentratoren adressierbar.)

Dem zentralen Steuerrechner sind beispielhaft zugeordnet:
1 Empfänger für die amtliche Zeit (DCF-77)
1 Bediengerät
1 Drucker
1 Externspeicher und
1 Einheit zur Ansteuerung örtlicher Anzeigen.
Außerdem sind am zentralen Steuerrechner z.B. bis zu 4 Fernübertragungseinheiten anschließbar.

### 24. Verwaltung der Schaltberechtigungen

Vom System sind verschiedene hierarchisch strukturierte Schaltberechtigungen vorgesehen. Grundsätzlich wird davon ausgegangen, daß zu einem Zeitpunkt jeweils nur eine Netzleitstelle als hauptschaltberechtigte Steuerstelle aktiv sein kann. Darüber hinaus können bis zu 3 weitere Netzleitstellen gewisse ausgewählte Schaltfelder oder ausgewählte Betriebsmittel fernsteuern. Aus betrieblichen Gründen kann es erforderlich sein, daß 2 Netzleitstellen die gesamte Schaltanlage fernsteuern können. Um hier Konflikffälle in der Steuerung zu vermeiden, sieht das System einen Algorithmus vor, mittels dessen diese HauptSchaltberechtigung von der einen auf die andere, dann bevorrechtigte) Netzleitstelle umgeschaltet werden kann. Die Übernahme der Hauptschaltberechtigung kann auf zweierlei Arten erfolgen:
- Übergabe der Hauptschaltberechtigung im ungestörten Betriebszustand
- Übergabe der Hauptschaltberechtigung bei Betriebsstörungen und/oder Teilausfall der im Augenblick aktivierten hauptschaltberechtigten Netzleitstelle.

Übergabe im ungestörten Betrieb:
Die anfordernde Netzleitstelle, welche die Hauptschaltberechtigung übernehmen möchte, sendet eine Anfrage an das Umspannwerk (zentraler Steuerrechner), welcher eine Rundspruch-Meldung an alle anderen Stationen mit aktivierter Befehlsrichtung aussendet. Diese Rundspruch-Meldung muß von allen anderen Stationen positiv beantwortet werden. Gleichzeitig mit dem Aussenden der Rundspruch-Meldung läuft eine Zeitüberwachung an. Die antwortenden Stationen haben die Möglichkeit, eine positive oder eine negative Bestätigung zurückzugeben. Alle Bestätigungen müssen innerhalb der Zeitüberwachung zurückgegeben werden. Dies ist charakteristisch für den ungestörten Fall.

Nur im Falle einer positiven Bestätigung von allen Stationen, wird die Hauptschaltberechtigung an die anfordernde Netzleitstelle übergeben. Diese Übergabe wird an alle Stationen durch eine Rundspruch-Meldung mitgeteilt. Bei Eintreffen nur einer negativen Bestätigung wird die Anforderung für die Übertragung der Hauptschaltberechtigung an die anfordernde Netzleitstelle verworfen. Dieser Vorgang wird ebenfalls mit Hilfe einer Rundspruch-Meldung an alle Stationen übermittelt. Da alle Bestätigungen, ob positiv oder negativ, innerhalb des Zeitintervalls eingetroffen sind, hat ein Auslaufen der Zeitüberwachung für diesen Fall keine Bedeutung. Die Zeitüberwachung wird automatisch angehalten, sobald die letzte Bestätigung eingetroffen ist.

Im Falle des gestörten Zustandes, d.h. wenn die Kommunikation des zentralen Steuerrechners des Umspannwerkes an eine Netzleitstelle mit aktivierter Befehlsrichtung unterbrochen ist, wird aufgrund der unterbrochenen Fernübertragungseinheit auf die ausgesandte Rundspruch-Meldung des zentralen Steuerrechners keine Antwort dieser Netzleitstelle eintreffen können. Dies hat zur Folge, daß innerhalb der Zeitüberwachung keine Antwort von dieser Netzleitstelle eintrifft und damit die Zeitüberwachung ausläuft. Dies bewirkt, daß ebenfalls die Anforderung auf Umschaltung der Hauptschaltberechtigung auf die anfordernde Netzleitstelle verworfen wird. Dieser Vorgang, verursacht durch das Nichteintreffen einer Bestätigungsmeldung, wird an alle Stationen durch eine Rundspruch-Meldung mitgeteilt. Die anfordernde Station hat nun die Möglichkeit, obwohl ihr auf diesem Wege die Hauptschaltberechtigung nicht zugeteilt wurde, mit Hilfe einer besonderen priorisierten Befehlsklasse Befehle an alle Betriebselemente des Umspannwerkes zu senden. Diese priorisierten Befehle werden im nachfolgenden als Schlüsselbefehle bezeichnet. Die Schlüsselbefehle sind dadurch gekennzeichnet, daß in der Hauptnetzleitstelle ein Schlüsselschalter betätigt werden muß, welcher dem dort befindlichen Steuerrechner den Zugriff auf diese Schlüsselbefehle ermöglicht. Das Aktivieren derartiger Schlüsselbefehle wird sowohl in der Netzleitstelle, als auch im Umspannwerk (im zentralen Steuerrechner) protokolliert. Damit ist es möglich, auch bei gestörten Übertragungseinrichtungen von jeder Netzleitstelle kurzzeitig die Hauptschaltberechtigung zu übernehmen. Beim Eintreffen des ersten Schlüsselbefehles wird automatisch die Hauptschaltberechtigung auf diejenige Netzleitstelle umgeschaltet, über deren aktivierten Befehlskanal der Schlüsselbefehl eingetroffen ist. Eine Rückschaltung auf andere Netzleitstellen aus der Ferne kann nur dann wieder erfolgen, wenn das Gesamtsystem ohne Störung arbeitet. Andernfalls ist eine Umschaltung vor Ort am zentralen Steuerrechner des Umspannwerks erforderlich.

### 25. Übertragungsprozeduren

Wie bereits in Abschnitt 19.2 dargestellt, lehnt sich das auf dem Fernübertragungskanal eingesetzte Protokoll an das bekannte HDLC-Protokoll an. Die HDLC Spezifikationen sind dahingehend modifiziert, daß kein Adress- und Control-Field-Teil verwendet wird. Ein Informationspaket auf der Übertragungsstrecke wird somit aus zwei Flags und einem eingebetteten Information-Field gebildet. Das Information-Field selber besteht aus einer Forward-Sequence-Number (FSN), der Umspannwerknummer UW, der Informationsart des Informations-Feldes, der Schaltfeldnummer, der Spannungsebene sowie einem variablen Block (Informations-Feld), in welchem die Meldungsnummern einer oder mehrerer Meldungen der im System möglichen Meldungstypen, eingebettet sind. Ein Informationspaket wird gemäß den HDLC-Protokollspezifikationen auf der übertragungstechnischen Seite durch z.B. 16 Prüfbits je Informationspaket gesichert.

Das Generatorpolynom 16. Grades ist der Klasse der Abramson-Code zuzuordnen. Jedes Information-Field beinhaltet (wie bereits in Abschnitt 19 aufgeführt) die sogenannte Forward-Sequence-Number. Mit Hilfe dieser Durchnumerierung in Vorwärtsrichtung und der Unterscheidung in Nutzpakete und Kanalbestätigungspakete wird ein Sicherungsalgorithmus realisiert, welcher Ähnlichkeiten mit dem PCR-Verfahren von CCITT No. 7 aufweist. Die vom zentralen Steuerrechner an die Fernübertragungseinheit weitergegebenen Meldungen werden von dieser eigenständig weiterbearbeitet. Diese Weiterbearbeitung gliedert sich in Senderichtung in zwei Teile (sh. Figur 12). Als Senderichtung soll im nachfolgenden die Übertragungsrichtung vom Standpunkt der Fernübertragungseinheit zur entfernten Netzleitstelle verstanden werden. In einem ersten Teil wird die empfangene Meldung, ergänzt um die Forward-Sequence-Number, zwischen zwei Flags eingebettet und in die synchrone Übertragungsstrecke eingespeist. In einem zweiten Teil wird diese Meldung gleichzeitig in einen Wiederholpuffer eingetragen. Die Numerierung der Forward-Sequence-Number erfolgt zyklisch, beginnend bei Null modulo 256. Die Länge des Wiederholpuffers ist damit zu 256 gespeicherten Meldungen vorgegeben.

Jedes Paket, welches von der Fernübertragungseinheit an die Netzleitstelle ausgesendet wurde, wird von dieser über den fernwirktechnischen Befehlsweg bei ordnungsgemäßen Empfang positiv bestätigt. Wurde dieses Informationspaket nicht ordnungsgemäß empfangen, so sendet die Netzleitstelle keine positive Bestätigung zurück. Prinzipiell wird auf der Übertragungsstrecke sowohl in Melderichtung als auch in Befehlsrichtung zwischen Signalisierpaketen und Nutzpaketen unterschieden. Signalisierpakete sind jene Pakete, mit welchen der Datenfluß, d.h. die Steuerung von Wiederholalgorithmen durchgeführt wird. Nutzpakete sind all jene Pakete, welche zur Übertragung von Befehlen (Netzleitstelle in Richtung Umspannwerk) oder zur Übertragung von Meldungen (Umspannwerk in Richtung Netzleitstelle) verwendet werden. Mit Hilfe der Signalisierpakete kann nun eine empfangende Station der sendenden Station mitteilen, bis zu welcher durchlaufenden Nummer der Nutzpakete sie dieselben ohne Fehler empfangen hat. Die sendende Station erkennt daraus, ob zwischenzeitlich auf dem Übertragungsweg Pakete gestört und damit von der empfangenen Station verworfen wurden. Im Falle eines ungestörten Empfangs von Nutzpaketen wird bei jedem Empfang eines Nutzpaketes ein Signalisierpaket generiert und zurückgesendet. Da diese Signalisierpakete sehr kurz sind werden hierdurch keine nennenswerten Verzögerungen auf der Übertragungsstrecke verursacht. Signalisierpakete werden jedoch immer dann zurückgestellt, wenn Nutzpakete in der eigenen Senderichtung zu Übertragung anliegen. Eine Zeitüberwachung verhindert, daß abhängig von der Übertragungsgeschwindigkeit des Kanals, mit einer genügend großen Zeitreserve spätestens immer dann ein Sinalisierpaket gesendet wird, bevor in der anderen Station der Wiederholpuffer vollaufen könnte. Dieser zeitgesteuerte Algorithmus wird nur dann in Aktion treten müssen, wenn in der eigenen Senderichtung ein großes Angebot von zu übertragenden Informationen ansteht. Im Normalfall kann davon ausgegangen werden, daß dieser Algorithmus nicht aktiviert zu werden braucht. Es kann so weiterhin der Fall betrachtet werden, daß ein generiertes Signalisierpaket, durch welches der anderen Stadion der Empfang eines ungestörten Nutzpaketes positiv bestätigt werden soll, sofort von der eigenen Sendeeinheit an die andere Station ausgesendet wird. Diese Signalisierinformation beinhaltet im wesentlichen (wie bereits oben aufgeführt) die Forward-Sequence-Number des zuletzt ungestört empfangenen Nutzpaketes. Bei ungestörtem Empfang dieses Signalisierpaketes in der anderen Station wird ein Herausnehmen von Meldungen aus dem Wiederholpuffer einschließlich der durch das soeben empfangene Signalisierpaket positiv bestätigten Meldung veranlaßt. Damit ist der Zyklus einer ungestörten Übertragung beendet.

Im Falle einer gestörten Übertragung eines Nutzpaketes von z.B. des Umspannwerkes in Richtung Netzleitstelle, wird bei gestörtem Empfang des Nutzpaketes von der Netzleitstelle kein Signalisierpaket ausgesendet. In diesem Fall greifen die Wiederholmechanismen im Umspannwerk. Werden vom zentralen Steuerrechner keine weiteren Meldungen an die Fernübertragungseinheit ausgegeben, erfolgt ein vorausschauendes Wiederholen der noch im Wiederholpuffer unbestätigt stehenden Meldungen. Diese Meldungen werden jedoch als Wiederholmeldungen gesondert gekennzeichnet. Ein Wiederholen aus diesem Wiederholpuffer erfolgt nun solange zyklisch bis
1. weitere Meldungen vom zentralen Steuerrechner an die Fernübertragungseinheit übergeben werden oder
2. positive Quittierungen von der Netzleitstelle empfangen wurden.

Neue Meldungen vom zentralen Steuerrechner bewirken ein Unterbrechen des zyklischen Wiederholens aus dem Wiederholpuffer. Diese neuen Meldungen werden sofort auf den Übertragungskanal ausgegeben und im Wiederholpuffer hintenanstehend eingespeichert. Sie werden somit sofort auf die Übertragungsstrekke ausgegeben und konflikffrei in den laufenden Wiederholmechanismus eingefügt. Bei Empfang von positiven Bestätigungszeichen werden die so bestätigten Meldungen aus dem Wiederholpuffer entfernt und damit dieser entleert. In der zentralen Steuerstelle werden von der dort vorhandenen Fernübertragungseinheit all diejenigen Meldungen herausgefiltert, welche bereits fehlerfrei empfangen wurden, aber durch den vorausschauenden Wiederholmechanismus (in diesem Fall unnötigerweise) u. U. mehrmals gesendet wurden. Dieses Herausfiltern erfolgt sehr einfach dadurch, daß ein Vergleich der bestätigten Forward-Sequence-Number und der mit Wiederholkennung versehenen Forward-Sequence-Number erfolgt. Der Vorteil des hier implementierten Verfahrens nach ist darin zu sehen, daß für die gesamte Abwicklung des Protokolls keine Zeitbedingungen eingehalten werden müssen.

Werden durch den Ausfall einer Übertragungsrichtung keine Signalisierpakete mehr empfangen, welche positive Bestätigungen von fehlerfrei empfangenen Nutzpaketen beinhalten, so wird mit Sicherheit der Meldungs-Wiederholpuffer je nach Meldungsaufkommen nach einer gewissen Zeit überlaufen. In diesem Falle werden alle im Wiederholpuffer anstehenden Meldungen gelöscht. Alle ab diesem Zeitpunkt neu vom zentralen Steuerrechner übergebenen und damit in die Ferne übertragenen Meldungen sind mit einer dies anzeigenden Überlaufkennung versehen. Die Zählung der Forward-Sequence-Number beginnt erneut mit Null (modulo 256). Die empfangende Station dekodiert diese Überlaufkennung des Meldungswiederholpuffers. Sobald der Rück-Kanal für die Bestätigung durch Signalisierpakete wieder zur Verfügung steht, wird über einen zusätzlich zu gebenden Rückstellbefehl in der Fernübertragungseinheit der sendenden Station die Überlaufkennzeichnung weggenommen. Die erste Meldung, welche ohne Überlaufkennung ausgesendet wird, besitzt erneut die Forward-Sequence-Number Null. Damit wird eine Synchronisation der auf logischer Ebene asynchron arbeiteten Stationen hinsichtlich der Forward-Sequence-Number sichergestellt.

### 26. Systemverträglichkeit mit bestehenden Einrichtungen

Die Informationsdarstellung unterscheidet sich im hier vorgestellten System grundsätzlich von allen bisher im Einsatz befindlichen Fernwirkanlagen. Nur dadurch läßt sich die Durchgängigkeit der Informationen und ihrer Codierung über mehrere Ebenen des Informationsnetzes hinweg erreichen.
Eine Anpassung an bestehende Systeme bedeutet einen Verzicht auf viele der in diesem Konzept enthaltenen Vorteile.

Zwei Arten der Anpassung können erforderlich sein:
- Anpassung dieses neuen Fernwirksystemes an eine vorhandene Netzleitstelle und
- Anpassung vorhandener Fernwirkanlagen an Netzleitstellen die für den Empfang des hier vorgestellten Fernwirksystems eingerichtet sind.

Eine Anpassung an bestehende Netzleitstellen, eingerichtet für ein altes Fernwirkformat, geschieht derart, daß die Fernübertragungseinheiten Fernwirktelegramme so bilden, wie sie von der nachgeschalteten Netzleitstelle empfangen werden können. Die Umsetzung der bis dahin durchgängig codierten Meldungen und Befehle in die herkömmliche Fernwirk-Bitstruktur erfolgt parametrierbar im zentralen Steuerrechner.

Problemlos gestaltet sich die Anpassung einer herkömmlichen Fernwirkübertragung an eine für das hier vorgesehene Datenformat eingerichtete Netzleitstelle. Hierzu wird anstelle der Prozeßmodule an einen modifizierten Meldungskonzentrator ein Telegrafiekanal herkömmlicher Fernwirkanlagen mit der alten Bit-struktur angeschlossen. Die Adaption an die im System intern verwendete Informationsstruktur erfolgt vollständig auf diesem modifizierten Meldungskonzentrator, so daß jede weitere Hard- und Software aus der neuen Systemkonzeption übernommen werden kann. Mit Hilfe des am zentralen Steuerrechner angeschlossenen Bediengeräts werden die hierfür benötigten Daten eingegeben und im Meldungskonzentrator nicht flüchtig abgelegt. Diese Einheit zur Umsetzung befindet sich am Ort der Netzleitstelle und dient außer zu der hier beschriebenen Anpassung zur Einspeisung von örtlich anfallenden Informationen in das Gesamtinformationssystem. Der Befehlsweg wird analog behandelt. Die Umsetzung der Informationen in 1 Bit-Informationen der herkömmlichen Fernwirktechnik erfolgt im Befehlsübertragungsmodul des modifizierten Meldungskonzentrators. Das Befehlsübertragungsmodul ist analog über das Bediengerät (angeschlossen am zentralen Steuerrechner) parametrierbar. Auch hier gelten die Password-geschützten und Benutzergeführten Eingabeprozeduren (siehe Abschnitt 22).

Der Anschluß von Netzleitstellen, die unterschiedliche Informationsformate (alt/neu) erfordern, kann im gemischten Betrieb über die in Abschnitt 29 beschriebene Doppelrechner-Struktur erfolgen.

### 27. Anpassung an Einrichtungen der integrierten Sekundärtechnik

In den zukünftigen Schaltanlagen wird die integrierte Sekundärtechnik in zunehmenden Maße eingesetzt. Hierbei werden Schaltanlagen-intern die fernwirkrelevanten Informationen über ein paralleles Bus-Interface oder eine serielle Schnittstelle unter einander ausgetauscht.
Hierüber laufen Schaltgerätestellungsmeldungen, Schutz- und Schaltfehlerschutzinformationen sowie in weiterer Zukunft auch die Meßwerte. Die Befehlsgabe (z.B. Schutzauslösung) wird ebenfalls über diese Informationsstrecken erfolgen. Das hier vorgestellte Fernwirksystem wird die Möglichkeit bieten, über ein modifiziertes Prozeßmodul an diesem Informationsverkehr teilzunehmen.

### 28. Bestimmung der Kanalgüte in Befehlsrichtung

Herkömmliche Fernwirksysteme zeigen nicht erkannte Telegramme mittels einer Impulsfehlermeldung an. Da bei dem hier vorgestellten System die rein übertragungstechnischen Vorgänge an der Peripherie (Fernübertragungseinheit) ablaufen und Fehler dort direkt abgefangen werden, enthält die Aussage über das Auftreten eines Impulsfehlers keine verwertbare Information. Insbesondere wenn aus dem häufigeren Auftreten von Impulsfehlern eine Verschlechterung der Qualität des Übertragungskanals abgeleitet werden soll. Im hier vorgestellten System werden gestörte Meldungen über die Differenz der eigenen Forward-Sequence-Number und der empfangenen Forward-Sequence-Number (bzw. der Wiederholpuffer-Überlauf-Kennung, bzw. aufgrund der Prüfsummen (CRC)-Abprüfung) festgestellt. Ein Maß für die Güte des Übertragungskanals bzw. eine Aussage über die Anzahl gestörter Meldungen innerhalb eines bestimmten Zeitabschnittes kann auf diese Weise ermittelt werden. Die Ermittlung dieser Differenz kann zu fest vorgegebenen Zeitabschnitten mit Hilfe der Signalisierpakete erfolgen.

Das System ermöglicht so eine Aussage wieviel Prozent der z.B. in der letzten Stunde zur Übertragung anstehenden Meldungen gestört worden sind. Weitergehende Interpretierungen dieser Zahl werden von dem System nicht vorgenommen.

### 29. Sicherheitsaspekte in der Unterstation

In der herkömmlichen Fernwirktechnik steht bei Mehrfach-Steuermöglichkeiten für jeden Übertragungsweg eine komplette eigene Fernwirkanlage zur Verfügung. Die Befehle bzw. Meldungen laufen lediglich über Abriegelungsrelais in die Schaltanlage.

Bei dem hier vorgestellten System besteht trotz mehrfacher Steuermöglichkeit die Gefahr des Ausfalles des zentralen Steuerrechners bzw. der Meldungsvorverarbeitung. Dies würde zu einem Gesamtausfall der Anlage für alle Steuerrichtungen führen. Der Ausfall eines Meldungskonzentrators wird nur zum Ausfall eines Schaltfeldes führen. Dar Ausfall einer Fernübertragungseinheit führt nur zum Ausfall eines Befehlsund Meldeweges.

Basierend auf diesen Überlegungen werden die Meldungskonzentratoren einschließlich der Befehlsübertragungsmodule vollständig autonom betrieben (z.B. eigene Stromversorgung).

Da ein Ausfall des zentralen Steuerrechners bzw. der Meldungsvorverarbeitung zu einem Stillstand der gesamten Unterstation führt, werden zur Sicherheit diese beiden zentralen Module vorteilhafterweise gedoppelt. Die hierbei entstehende Systemarchitektur ist dargestellt. Die Meldungskonzentratoren kommunizieren mit zwei getrennt arbeitenden Meldungsvorverarbeitungen über zwei getrennte, serielle Kommunikationsbusse. Der Austausch von Daten auf diesen seriellen Kommunikationsbussen erfolgt mit einer Übertragungsrate von z.B. 2 MBit/s. Diese getrennten, seriellen Kommunikationsbusse je Meldungs- und Befehlsrichtung können hardwaremäßig jeweils unabhängig von einander individuell von jedem Meldungskonzentrator weggeschaltet bzw. hinzugeschaltet werden. Die Arbeitsweise der gedoppelten Meldungsvorverarbeitung und der gedoppelten zentralen Steuerrechner erfolgt im Cold-Stand-By-Betrieb.
Nachfolgend wird die Kombination Meldungsvorverarbeitung und Zentraler Steuerrechner als Stationsrechner bezeichnet.
Ein dritter Rechner, der Systemrechner, wird zur Kontrolle dieser beiden Stationsrechner eingesetzt. An jedem Stationsrechner sind getrennt angeschlossen:
- das Bediengerät,
- Massenspeicher und
- Drucker.

Der Anschluß der Anzeigen vor Ort an einen dieser beiden Stationsrechner ist so ausgeführt, daß ein Wechsel von einem Stationsrechner auf den anderen von Hand leicht durchzuführen ist.

Der Anschluß der einzelnen Fernübertragungseinheiten auf die jeweilige Fernübertragungsstrecke erfolgt über Umschalter, welche vom Systemrechner gesteuert werden. Vom Systemrechner werden auch die einzelnen Meldungskonzentratoren an die jeweiligen seriellen Kommunikationsbusse angeschaltet bzw. weggeschaltet. Die Umschaltung von einem Stationsrechner auf den anderen Stationsrechner erfolgt so durch entsprechendes Umschalten der Meldungskonzentratoren auf den jeweiligen anderen Kommunikationsbus und Umschalten der Fernübertragungsstrecken auf die dem jeweiligen Stationsrechner zugeordneten Fernübertragungseinheiten. Diese Umschaltung unterliegt einer zwei aus drei Kontrolle, welche vom Systemrechner iniziiert und vom nicht aktiven Stationsrechner bestätigt werden muß. Im Falle der Störung des aktiven Stationsrechners genügt so die positive Quittierung des noch fehlerfrei arbeitenden, nicht aktiven Stationsrechners, auf welchen umgeschaltet werden soll. Zur gegenseitigen Überwachung zwischen Systemrechner und den Stationsrechnern werden periodisch Meldungen ausgetauscht. Antwortet einer der Rechner nicht mit der richtigen Antwort bzw. meldet er sich nicht automatisch mit der benötigten Meldung, so wird er entsprechend einer zwei-aus-drei-Kontrolle von den zwei anderen Rechnern außer Betrieb genommen. Dies gilt ebenfalls für den Systemrechner, welcher bei Defekt von den beiden Stationsrechnern außer Betrieb gesetzt werden kann. Erfolgt eine Umschaltung von einem Stationsrechner auf den anderen Stationsrechner, so muß der neu zu aktivierende Stationsrechner aus dem Zustand Cold-Stand-By hochgefahren werden. Dies hat zur Folge, daß der neu aktivierte Stationsrechner eine GA iniziiert, welche ihm den aktuellen Zustand aller Schaltfelder liefert. Diese Umschaltung auf den zweiten Stationsrechner wird den jeweiligen Netzleitstellen mit Hilfe einer Systemmeldung mitgeteilt. Die Umschaltung auf den zweiten Stationsrechner erfolgt nicht nur im Falle einer Störung. Zur Überprüfung der einzelnen Umschaltmechanismen wird täglich in verkehrsarman Betriebsstunden eine derartige Umschaltung automatisch iniziiert. Diese Umschaltung kann z.B. von der Uhrzeit (DCF-77) abgeleitet werden.

Die Konfigurierung der beiden Stationsrechner erfolgt getrennt über das jeweilige Bediengerät. Damit ist es möglich, den zweiten, nicht aktivierten Stationsrechner neu zu konfigurieren, ohne daß die gesamte Unterstation außer Betrieb genommen werden muß. Beim Umschalten auf den zweiten Stationsrechner wird die Einstellung der Hauptschaltberechtigung auf den in diesem Rechner abgelegten Defaultwert eingestellt. Dies hat zur Folge, daß bei einer derartigen Umschaltung eine Netzleitstelle, welche zum Zeitpunkt des Umschaltens abweichend von der Defaulteinstellung die Hauptschaltberechtigung wahrgenommen hatte, diese neu anfordern muß. Daß eine neue Anforderung durchgeführt werden muß, erkennt die Netzleitstelle aus der eingehenden Meldung: "Rechnerumschaltung in der Unterstation". Eine Umschaltung der Hauptschaltberechtigung ist in jedem Fall möglich (siehe Abschnitt 24).

Bei gleichzeitigem Betrieb beider Stationsrechner können die Fernübertragungseinheiten auf die beiden Stationsrechner in der Art aufgeteilt werden, daß z.B. der eine Stationsrechner Informationen im neuen, hier vorgestellten Format bearbeitet, während der andere Stationsrechner andere Fernwirkstrecken mit der herkömmlichen Telegrammstruktur bedient.
Allerdings können in dieser Betriebsart jeder Netzleitstelle nur bestimmte Schaltfelder (Meldungskonzentratoren) zugeordnet werden.

### 30. Verdichtete Meßwertübertragung

Unter bestimmten Betriebszuständen kann es notwendig sein, einen schnellen, groben Überblick über einen Teil der Meßwerte (z.B. U und I oder P und Q) aller Felder einer Schaltanlage zu gewinnen.
Hierfür bietet das hier vorgestellte System eine klassifizierte Meßwertübertragung mit kurzer Übertragungszeit an. Jeder Meßwert-Bereich ist in beispielsweise 4 Klassen unterteilt, welche durch 3 parametrierbare Schwellwerte festgelegt sind. Als Default-Werte können die nachstehenden Voreinstellungen gewählt werden:

| Klasse | Prozent des Meßbereichs | Schwellwert |
|---|---|---|
| I | 0.....9% | |
| | | 10% |
| II | 10.....49% | |
| | | 50% |
| III | 50.....89% | |
| | | 90% |
| IV | 90.....100% | |

Werden z.B. 3 Schaltfelder durch Schutzauslösungen nahezu zeitgleich (z.B. innerhalb von 100 ms) abgeschaltet, so kann davon ausgegangen werden, daß alle Meßwerte zu übertragen sind. Je nach Netzsicherheits-Philosophie müssen
- Spannung und Strom oder
- Wirk- und Blindleistung
schnellstmöglichst verfügbar sein.
Hierbei sind für eine rasche Information über die nun entstandenen Belastungen der einzelnen Betriebsmittel klassifizierte Meßwerte genügend hilfreich, sofern sie kurzfristig verfügbar sind. Die genauen Meßwerte werden anschließend zeitunkritisch übertragen.

Gemäß dem in Figur 7 dargestellten Aufbau eines Meldungstelegramms ergeben sich pro Schaltfeld in einem Maldungstelegramm ca. 5 - 15 Bit.

Die Übertragungsdauer für unterschiedliche Größe der Schaltanlage und Übertragungsgeschwindigkeit ergibt sich im Mittel zu

| Schaltanlagen mit | Übertragungsgeschwindigkeit | Übertragungszeit |
|---|---|---|
| 10 Schaltfeldern | 200 Bd | 0,8 s |
| 30 Schalffeldern | 600 Bd | 0,6 s |

### 31. Systemunterstützung bei Inbetriebnahmetests

Die Inbetriebnahme von Fernwirksystemen erfordert wegen des direkten und sofort zu erfolgenden Vergleichs zwischen der in der Unterstation eingegebenen Meldung und der in der entfernten Netzleitstelle daraufhin ausgegebenen Meldung in Klartext mehrere Personen. In der konventionellen Fernwirktechnik erfolgt diese Kontrolle über direkten telefonischen Informationsaustausch. Das hier vorgestellte System ermöglicht es, bei derartigen Inbetriebnahmetests, die in der Netzleitstelle ausgegebenen Informationen (Meldungen, Meßwerte usw.) systemintern in Klartextübertragung in die Unterstation zurück zu übertragen. Diese Rück-Übertragung erfolgt über den Befehlskanal (Informationstyp: Klartext). Durch Ausgabe dieser Klartexte kann der Inbetriebnehmer in der Unterstation ohne Zuhilfenahme weiterer Personen in der Netzleitstelle die ordnungsgemäße Eintreffen der Informationen überprüfen. Dies führt zu einer wesentlichen Einsparung von Inbetriebnahmepersonal, zu einer bedeutenden Zeitersparnis und verhindert Störungen des Wartenpersonals während ausgedehnter Inbetriebnahme- und Testarbeiten.

## Patentansprüche

1. Verfahren zur Datenübertragung in Fernwirknetzen eines Energieversorgungssystems, bei dem Informationen in Form von Telegrammen (Fig. 7) in Melde- und Befehlsrichtung zwischen mindestens einer Netzleitstelle und über Fernwirk-Übertragungsleitungen an,diese angeschlossene Unterstationen mit zugeordneten Schaltfeldern übertragen werden, wobei für die Telegramme ein Datenformat vorgegeben ist, das eine Mehrzahl von Feldern (1 bis 8) umfaßt, in denen in binärer Darstellung und sequentieller Reihenfolge mindestens eine Adresse (UW), die Informationsart (IA) und das Informationsfeld (IF) enthalten sind, wobei durch die Informationsart (4, IA) die Art der Daten im Informationsfeld (7, IF) bestimmt ist,
**dadurch gekennzeichnet,**
- daß in einem hierarchischen Fernwirknetz den über das Informationsfeld (7, IF) in Melderichtung zu meldenden Ereignissen jedem im System vorkommenden Ereignis eine für das gesamte Fermwirknetz gleichbleibend einheitliche Meldungsnummer zugeordnet ist, die durch Parametrierung in den Unterstationen generiert wird;
- daß das in der Unterstation generierte Telegramm die Bezeichnung der meldenden Unterstation (3, UW) und weitere Bezeichnungen (5, SF; 6, SE), welche die Informationsquelle eindeutig innerhalb des Fernwirknetzes bestimmen, enthält; und
- daß in dem Informationsfeld (7, IF) mindestens eine der oben erwähnten Meldungsnummern enthalten ist.

2. Verfahren nach Anspzuch 1 dadurch gekennzeichnet, daß die Daten im Informationsfeld (7,IF) in Form von Anderungsinformationen übertragen werden, die aus einem Alt-Neu-Vergleich (RUPI) an/in der Informationsquelle gewonnen werden.

3. Verfahren nach Anspruch 1 oder 2, dadurch gekennzeichnet, daß die Daten im Informationsfeld (7, IF) vor ihrer Übertragung in Melderichtung in mindestens eine Meldungskonzentrationsschritt durch Extraktion aus dem Gesamtinformationsvorrat gewonnen werden.

4. Verfahren nach Anspruch 3, dadurch gekennzeichnet, caß durch ein Ereignis zusammenhängende Einzelmeldungen zu einer Übergeordneten, durch eine Meldungsnummer dargestellten Information (IF) verknüpft werden.

5. Verfahren nach Anspruch 4, dadurch gekennzeichnet, daß beim Vorliegen von durch ein Ereignis zusammenhängenden Einzelmeldungen die Meldungsnummer mit der übergeordneten Inforation, aber nicht die Einzelmeldungen für sich fernübertragen werden.

6. Verfahren nach Anspruch 4, dadurch gekennzeichnet, daß die zur Bildung der Meldungsnummer (7,IF) von äbergeordneter Information zusammengefaßten Einzelmeldungen durch einen vom Anwender in einem Meldungskonzentrator einstellbaren Generierungsalgorithmus bestimmt werden.

7. Verfahren nach Anspruch 4 oder 6, dadurch gekennzeichnet, daß die zur Bildung der Meldungsnummer (7,IF) von übergeordneter Information zusammengefaßten Einzelmeldungen für die Fernübertragung paramenrierbar verzögert (z.B. um 100 ms) werden.

8. Verfahren nach einem der Ansprüche 4 oder 6, dadurch gekennzeichnet, daß jede der zur Bildung der Meldungsnummer (7,IF) von Übergeordneter Information zusammengefaßten Einzelmeldungen zeitunkritisch, individuell und parametrierbaz zu einem beliebigen späteren Zeitpunkt wahlweise mit oder ohne Zeitstempel (Echtzeitmeldung) fernübertragen werden kann.

9. Verfahren nach Anspruch 4, dadurch gekennzeichnet, daß Zustandsänderungen von Schaltgeräten von AUS nach EIN oder von EIN nach AUS als übergeordnete, durch eine Meldungsnummer dargestellte Information (IF) fernübertragen werden.

10. Verfahren nach Anspruch 1 oder 2, dadurch gekennzeichnet, daß das Datenformat (1 - 8) bei Verwendung zur Meldungsübertragung nur eine einzelne Meldung (z.B. Fehlermeldung) enthält.

11. Verfahren nach einem der vorhergehenden Ansprüche, dadurch gekennzeichnet, daß große Informationsmengen in langen, aus logischen Blöcken zusammengesetzten Übertragungspaketen übertragen werden, wobei die Übertragung eines Übertragungspakets ohne Informationsverlust nach jedem logischen Block unterbrochen werden kann.

12. Verfahren nach einem der vorhergehenden Ansprüche, dadurch gekennzeichnet, daß Meßwerte kodiert in physikalischen Größen mit Sl-Einheiten übertragen werden.

13. Verfahren nach einem der vorhergehenden Ansprüche, dadurch gekennzeichnet, daß die Güte des Übertragungskanals fortwährend überwacht wird.

14. Verfahren nach einem der vorhergehenden Ansprüche, dadurch gekennzeichnet, daß die Steuerung in einem Netzknoten bei Mehrfachzugriff in der Unterstation durch eine eindeutige, umschaltbare Zuordnung der uneingeschränkten Schaltberechtigung aller Betriebsmittel und Schaltfelder durchgeführt wird.

15. Verfahren nach einem der vorhergehenden Ansprüche, dadurch gekennzeichnet, daß die in einer Unterstation in ihrer Gesamtheit anfallende Informationsmenge durch Überlagerung mit Informationsmasken in beliebige Untermengen aufteilbar ist, und diese Untermengen ausgewählten Informationssenken zur Verfügung gestellt werden.

16. Verfahren nach einem der vorhergehenden Ansprüche, dadurch gekennzeichnet, daß Klartext in Meldeund Befehlsrichtung übertragen werden kann, insbesondere zur Unterstützung bei der Inbetriebnahme des Fernwirksystems.

17. Einrichtung zur Durchführung des Verfahrens nach Anspruch 1, gekennzeichnet durch mindestens einen Prozeßmodul mit elektromagnetischer Abschirmung zur prozeßnahen Informationserfassung und Befehlsausgabe vor Ort, mindestens einen zentralen Steuerrechner und mindestens einen Meldungskonzentrator/Befehlsübertrager, der mit mindestens einem Prozeßmodul verknüpft ist.

18. Einrichtung nach Anspruch 17, ferner gekennzeichnet durch mindestens eine Einrichtung zur Meldungsvorverarbeitung, die mit mindestens einem Meldungskonzentrator verbunden ist.

19. Einrichtung nach Anspruch 18, ferner gekennzeichnet durch mindestens eine Fernübertragungseinheit, die mit mindestens einem zentralen Steuerrechner verbunden ist, wobei der zentrale Steuerrechner in Befehlsrichtung direkt mit mindestens einem Meldungskonzentrator/Befehlsübertrager verbunden ist.

20. Einrichtung nach einem der Ansprüche 17 bis 19, dadurch gekennzeichnet, daß mit Hilfe des mindestens einen Prozeßmoduls Informationen unterschiedlichen Typs (IA) eines Schaltfelds schalffeldbezogen zusammenbleiben und die Zuordnung zwischen physikalischer Klemme (z.B. 32 Kontakte) und Informationsnummer (IF) auf der logischen Verarbeitungsstufe in einer der nachfolgenden Stufen erfolgt.

## Claims

1. A process for data transmission in remote-action networks of an energy supply system, in which items of information in the form of telegrams (Figure 7) are transmitted with associated switching sections in the signalling- and command directions between at least one network control location and, via remote-action transmission lines, sub-stations connected therewith, wherein a data format is given for the telegrams and comprises a plurality of sections (1 to 8) in which at least one address (UW), the information type (IA) and the information section (IF) are contained in binary form and sequential order, wherein the kind of data in the information section (7, IF) is determined by the information type (4, IA),
characterised in that,
- within a hierarchical remote-action network, a unitary signalling number which is the same for the entire remote-action network is associated with each event to occur in the system to the events to be signalled in the signalling direction via the information section (7, IF), and the signalling number is generated by parametering in the sub-stations;
- that the telegram generated in the sub-station contains the designation of the signalling sub-station (3, UW) and further designations (5, SF; 6, SE) which unambiguously determine the information source within the remote-action network, and
- that at least one of the afore-mentioned signalling numbers is contained in the information section (7, IF).

2. A process according to Claim 1, characterised in that the data in the information section (7, IF) is transmitted as items of alteration information which are obtained from an old-new-comparison (RUPI) at/in the information source.

3. A process according to Claim 1 or Claim 2, characterised in that prior to their transmission in the signalling direction the data in the information section (7, IF) are obtained in at least one signalling concentration step by extraction from the total information supply.

4. A process according to Claim 3, characterised in that individual signallings related to an event are linked to a generic item of information (IF) represented by a signalling number.

5. A process according to Claim 4, characterised in that, when individual signallings related to an event are present, the signalling number is remote-transmitted with the generic item of information, but the individual signallings are not.

6. A process according to Claim 4, characterised in that the individual signallings grouped by the generic items of information to form the signalling number (7, IF) are determined by a generation algorithm which can be set by the user in a signalling concentrator.

7. A process according to Claim 4 or Claim 6, characterised in that the individual signallings grouped by the generic items of information to form the signalling number (7, IF) are parametrably delayed for remote transmission (e.g. by 100 ms).

8. A process according to any one of Claims 4 or 6, characterised in that each of the individual signallings grouped by the generic information to form the signalling number (7, IF) can be remote-transmitted in a time-uncritical fashion, individually and parametrably at any later time, selectively with or without time stamp (real time signalling).

9. A process according to Claim 4, characterised in that alterations in status of switching devices from OFF to ON or from ON to OFF are remote-transmitted as generic items of information (IF) represented by a signalling number.

10. A process according to claim 1 or claim 2, characterised in that the data format (1 - 8) when used for signalling transmission contains only a single signalling (e.g. fault signalling).

11. A process according to any one of the preceding claims, characterised in that large amounts of information are transmitted in long transmission packets which are composed of logic blocks, wherein the transmission of a transmission packet can be interrupted each logic block without loss of information.

12. A process according to any one of the preceding claims, characterised in that measurement values are transmitted coded in physical parameters with SI-units.

13. A process according to any one of the preceding claims, characterised in that the quality of the transmission channel is continually monitored.

14. A process according to any one of the preceding claims, characterised in that control is effected in a network node upon multiple access in the sub-station by an unambiguous, switchable association of the unrestricted switching authentification of all operating means and switchings sections.

15. A process according to any one of the preceding claims, characterised in that the total amount of information incident on a sub-station can be sub-divided into any sub-amounts by superimposition with information masks and said sub-amounts are made available to selected information sinks.

16. A process according to any one of the preceding claims, characterised in that clear text can be transmitted in the signalling and command directions, in particular for assistance during start-up of the remote-action system.

17. Apparatus for carrying out the process according to claim 1, characterised by at least one process module with electromagnetic shielding for process-related information detection and local command output, at least one central control computer and at least one signalling concentrator/command transmitter which is linked to at least one process module.

18. Apparatus according to claim 17, further characterised by at least one means for signalling pre-processing, which is connected to at least one signalling concentrator.

19. Apparatus according to Claim 18, further characterised by at least one remote transmission unit which is connected to at least one central control computer, wherein the central control computer is connected in the command direction directly to at least one signalling concentrator/command transmitter.

20. Apparatus according to one of Claims 17 to 19, characterised in that, by means of the at least one process module, items of information of different types (IA) of a switching section remain together in switching section-related fashion and the association between a physical terminal (for example 32 contacts) and information number (IF) on the logic processing stage takes place in one of the following stages.

## Revendications

1. Procédé de transmission de données dans des réseaux de commande à distance d'un système d'alimentation en énergie, dans lequel des informations sont transmises, sous la forme de télégrammes (figure 7), dans le sens des messages et dans le sens des instructions, entre au moins un poste de commande du réseau et des sous-stations, avec tableaux de commutation associés, et reliées à celui-ci par l'intermédiaire de lignes de transmission de commande à distance, et dans lequel est prédéfini, pour les télégrammes, un format des données, qui comprend une pluralité de zones (1 à 8), dans lesquelles sont contenus, en représentation binaire et selon un ordre séquentiel, au moins une adresse (UW), le type d'information (IA) et la zone d'information (IF), le type des données présentes dans la zone d'information (7, IF) étant déterminé par le type d'information (4, IA),
caractérisé en ce que
- dans un réseau de commande à distance à hiérarchie, il est chaque fois associé, aux événements à signaler par l'intermédiaire de la zone d'information (7, 1F), dans le sens des messages, et ce, pour chaque événement qui se produit dans le système, un numéro de message uniforme qui reste identique pour la totalité du réseau de commande à distance et qui est produit par paramétrage dans les sous-stations ;
- le télégramme, produit dans les sous-stations, contient l'identification de la sous-station (3, UW) à l'origine du message, et d'autres identifications (5, SF ; 6, SE) qui définissent, de façon univoque, la source d'information au sein du réseau de commande à distance ; et
- en ce qu'au moins l'un des numéros de message ci-dessus mentionnés est contenu dans la zone conformation (7, IF).

2. Procédé selon la revendication 1, caractérisé en ce que les données, présentes dans la zone d'information (7, IF), qui ont été obtenues à partir d'une comparaison avant-après (RUPI) à/dans la source d'information, sont transmises sous la forme d'informations de modification.

3. Procédé selon la revendication 1 ou 2, caractérisé en ce que, avant leur transmission dans le sens des messages, les données présentes dans la zone d'information (7, IF) sont obtenues par extraction, en au moins une étape de concentration de message, de la masse globale d'informations.

4. Procédé selon la revendication 3, caractérisé en ce que l'on associe des messages individuels, en relation avec un événement, à une information (IF) d'ordre supérieur, représentée par un numéro de message.

5. Procédé selon la revendication 4, caractérisé en ce que, en présence de messages individuels, en relation avec un événement, le numéro de message est télétransmis avec l'information d'ordre supérieur, mais les messages individuels eux-mêmes ne sont pas transmis.

6. Procédé selon la revendication 4, caractérisé en ce que, pour constituer le numéro de message (7, IF) d'une information d'ordre supérieur, des messages individuels regroupés sont déterminés par un algorithme de génération, ajustable dans un concentrateur de messages par l'utilisateur.

7. Procédé selon la revendication 4 ou 6, caractérisé en ce que, pour constituer le numéro de message (7, IF) d'une information d'ordre supérieur, des messages individuels regroupés peuvent être retardés (par exemple, de 100 ms), de manière paramétrable, pour la télétransmission.

8. Procédé selon l'une des revendications 4 ou 6, caractérisé en ce que chacun des messages individuels regroupés par une information d'ordre supérieur pour la constitution du numéro de message (7, IF) peut être transmis à distance de façon non critique dans le temps, individueile et paramétrable, à un moment ultérieur quelconque, au choix avec ou sans marquage temporel (message en temps réel).

9. Procédé selon la revendication 4, caractérisé en ce que des changements d'état d'appareils de commutation, de FERME à OUVERT ou d'OUVERT à FERME, sont transmis à distance en tant qu'information d'ordre supérieur (IF), représentée par un numéro de message.

10. Procédé selon la revendication 1 ou 2, caractérisé en ce que le format des données (1 à 8) ne contient qu'un seul message (par exemple, un message d'erreur), dans le cas de l'utilisation pour la transmission de messages.

11. Procédé selon l'une des revendications précédentes, caractérisé en ce que de grandes quantités d'informations sont transmises en longs paquets de données, composés de blocs logiques, la transmission d'un paquet en cours de transmission pouvant être interrompue, sans perte d'informations, après chaque bloc logique.

12. Procédé selon l'une des revendications précédentes, caractérisé en ce que des valeurs de mesure sont transmises, sous une forme codée en grandeurs physiques en unités SI.

13. procédé selon l'une des revendications précédentes, caractérisé en ce que la qualité de la voie de transmisson est continuellement surveillée.

14. procédé selon l'une des revendications précédentes, caractérisé en ce que la commande est exécutée, dans un noeud de réseau, lors d'un accès multiple dans la sous-station, par une coordination, univoque et commutable, des autorisations non restreintes de commutation de tous les moyens d'exploitation et de tous les tableaux de commutation.

15. Procédé selon l'une des revendications précédentes, caractérisé en ce que la quantité d'informations, produite dans sa totalité dans une sous-station, peut être divisée en sous-ensembles quelconques par superposition de masques d'informations, et en ce que ces sous-ensembles sont mis à la disposition de collecteurs d'informations sélectionnés.

16. Procédé selon l'une des revendications précédentes, caractérisé en ce que du texte en clair peur être transmis, dans le sens des messages et dans le sens des instructions, notamment à des fins d'assistance lors de la mise en service du système de commande à distance.

17. Dispositif pour la mise en oeuvre du procédé selon la revendication 1, caractérisé par au moins un module de traitement à blindage électromagnétique pour la saisie de données liées aux processus et pour l'émission d'instructions in situ, au moins un ordinateur central de commande et au moins un concentrateur de messages/transmetteur d'instructions, qui est lié à au moins un module de traitement.

18. Dispositif selon la revendication 17, caractérisé en outre par au moins un dispositif de prétraitement des messages, qui est relié à au moins un concentrateur de messages.

19. Dispositif selon la revendication 18, caractérisé en outre par au moins une unité de télétransmission, qui est reliée à au moins un ordinateur central de commande, l'ordinateur central de commande étant, quant à lui, directement relié, dans le sens des instructions, à au moins un concentrateur de messages/transmetteur d'instructions.

20. Dispositif selon l'une des revendications 17 à 19, caractérisé en ce que, à l'aide dudit au moins un module de traitement, des informations de type différent (IA) d'un tableau de commutation restent ensemble par rapport au tableau de commutation, et en ce que la coordination entre bornes physiques de connexion (par exemple, 32 contacts) et numéros d'information (IF) dans l'étage de traitement, logique, est effectuée dans l'un des étages suivants.
